# EUROPEAN PATENT SPECIFICATION

(11) **EP 2 583 468 B1**
(45) Date of publication and mention of the grant of the patent: **21.10.2015**
(21) Application number: 11735974.5
(22) Date of filing: 21.06.2011
(51) Int. Cl.: H04N 9/31

(54) **DOUBLE STACKED PROJECTION**
DOPPELSTAPELPROJEKTION
PROJECTION DOUBLE PAR EMPILEMENT

(30) Priority: 21.06.2010 US 356980 P
(43) Date of publication of application: 24.04.2013
(73) Proprietor: IMAX Europe SA, 1020 Brussels (BE)
(72) Inventor: IVERSEN, Steen, Svendstorp, DK-2800 Kgs. Lyngby (DK)
(74) Representative: Phillips & Leigh
(86) International application number: PCT/DK2011/000066
(87) International publication number: WO 2011/160629

(56) References cited:
- US-A1- 2007 132 965
- US-A1- 2007 133 794
- OKATANI T ET AL: "Study of Image Quality of Superimposed Projection Using Multiple Projectors", IEEE TRANSACTIONS ON IMAGE PROCESSING, IEEE SERVICE CENTER, PISCATAWAY, NJ, US, vol. 17, no. 2, 1 February 2009 (2009-02-01), pages 424-429, XP011249562, ISSN: 1057-7149

## Description

### BACKGROUND OF THE INVENTION

Modern super high resolution 4K digital cinema projectors designed for normal sized cinema screens have a resolution ideal also for very large screens but lack the brightness needed for these. Double stacking projectors are an effective way of increasing brightness, but traditional double stacking is difficult at such high resolutions because the tolerance in the alignment of projected images becomes very small and is hard to meet during presentations due to thermal induced movements in the mechanical and optical parts and vibrations from the audio system. In other applications like temporary projection set-ups, home cinemas etc., alignment of double stacked projectors may be difficult to maintain even when working at much lower resolutions.

"Double stacking" of projectors, i.e. overlaying the images of two projectors projecting the same image, is a well known way to increase brightness. However, it is also well known that traditional double stacking requires high maintenance of the alignment of the projectors to maintain image quality.

In 4K projection, traditional double stacking is not considered an option, because it would be impossible to keep the sharpness and detail on par with that of a single 4K projector throughout a presentation. This is unfortunate for giant screen theatres, because while 4K projectors lend themselves well to giant screens in terms of resolution, available projectors generally do not have enough light for giant screens, so stacking would seem desirable to double the light output.

In a double stacking system the projectors may work at different peak temperatures, which may cause them to age differently and have different lifetimes. If laser projectors are used, these may cause speckles artefact, which reduces the image quality.

### OBJECT OF THE INVENTION

An object of the invention is to present a double stacking system that overcomes the above mentioned difficulty and problems and presents other advantages. Exemplary applications may be giant screen cinemas, simulators, conference presentations, staging, exhibits, outdoor projection, traditional cinemas, home cinemas, and other applications where brightness of a projected image is a consideration.

An object of the present invention is also to present a novel image processing system for double stacked projector configurations that overcomes the above mentioned maintenance difficulties and provides for a high quality, low-maintenance double stacking system even for 4K projection.

### SUMMARY OF THE INVENTION

An image processing circuit comprising thresholding limiters and constrained smoothing filters splits a source image into two images, which, when projected overlaid on a projection surface by a pair of double-stacked projectors, together form an image essentially identical to the source image, but where one image has significantly less high frequency components. The invention presents advantages over traditional double stacking in aspects of projector alignment, content copy protection, banding artefacts and equipment costs.

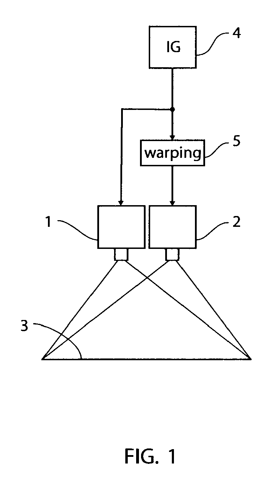

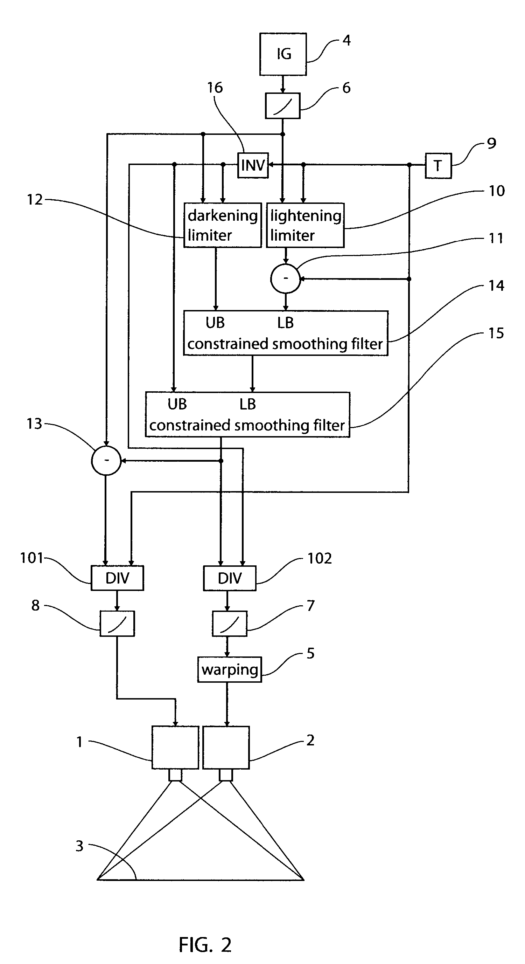

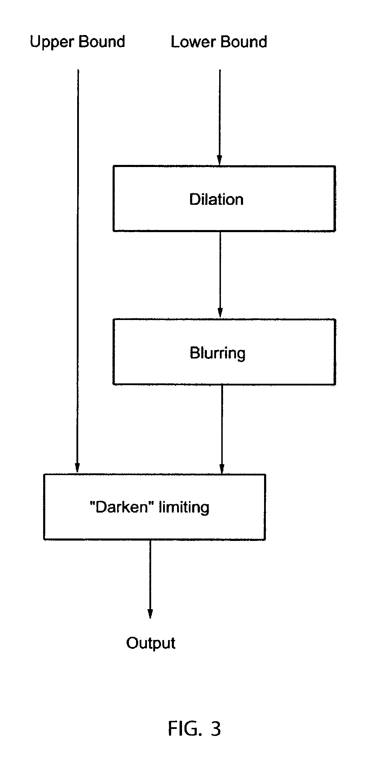

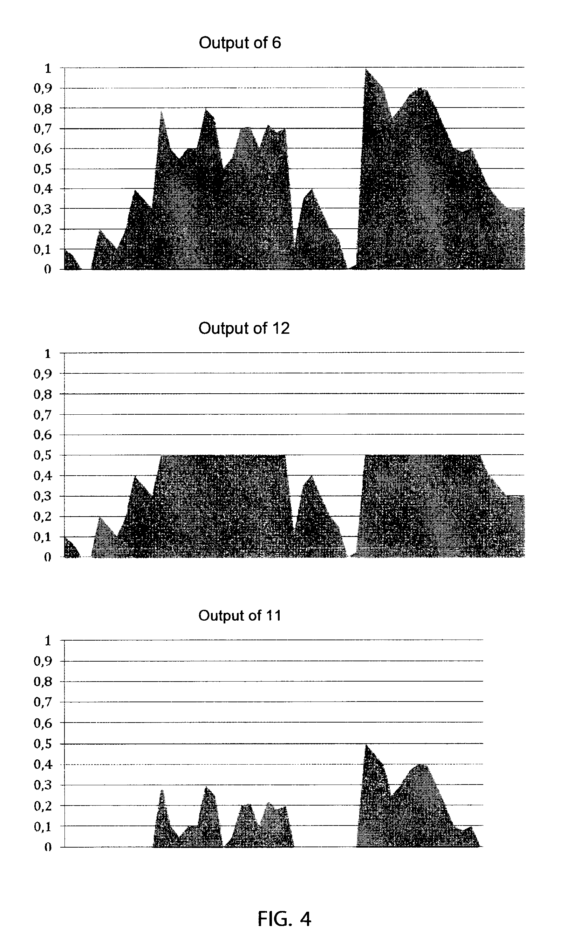

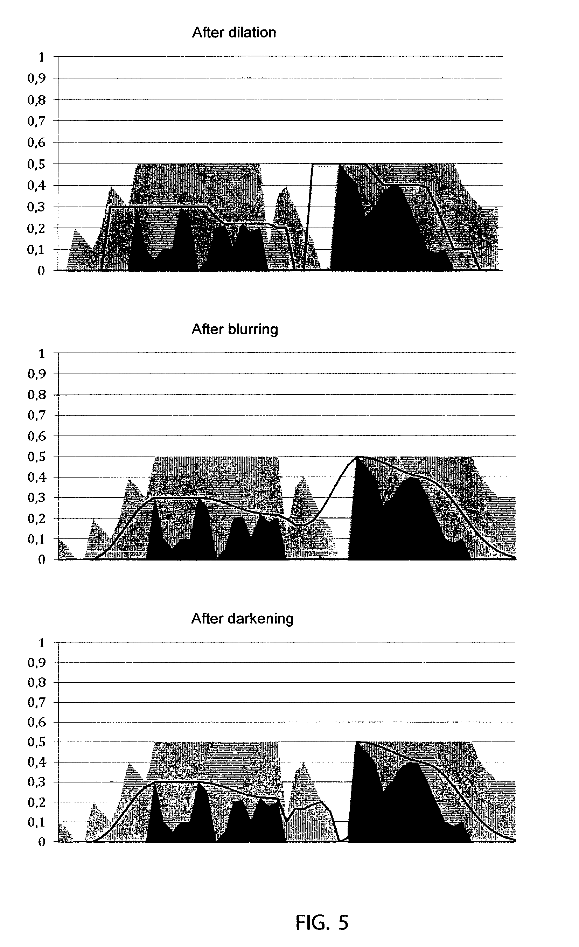

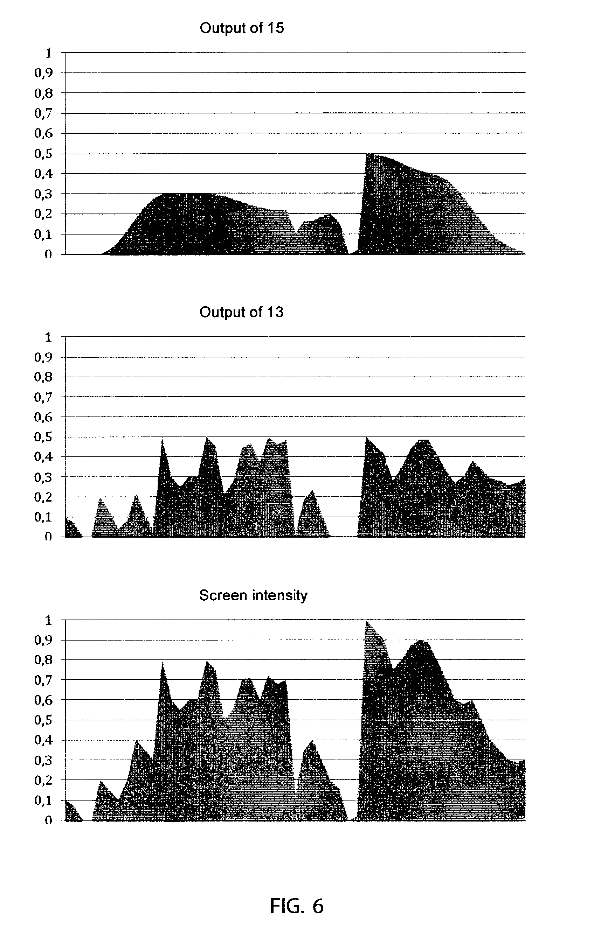

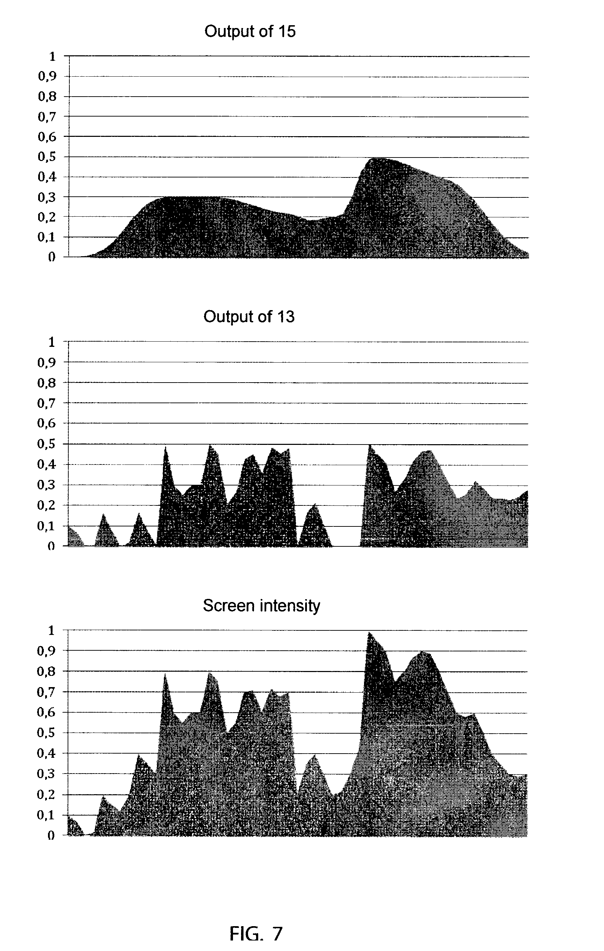

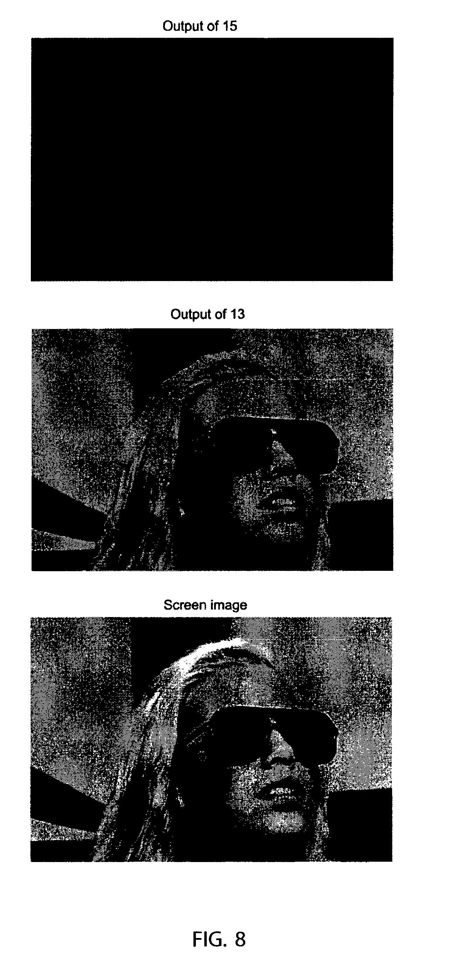

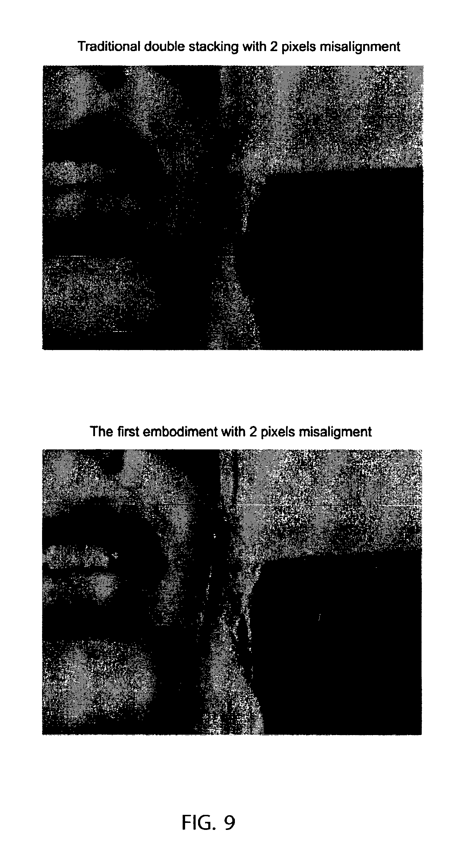

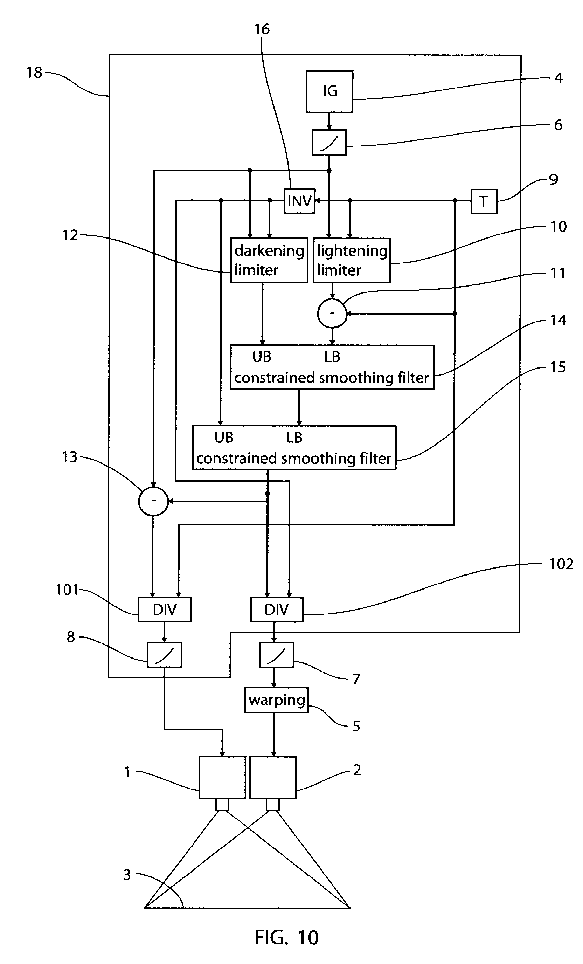

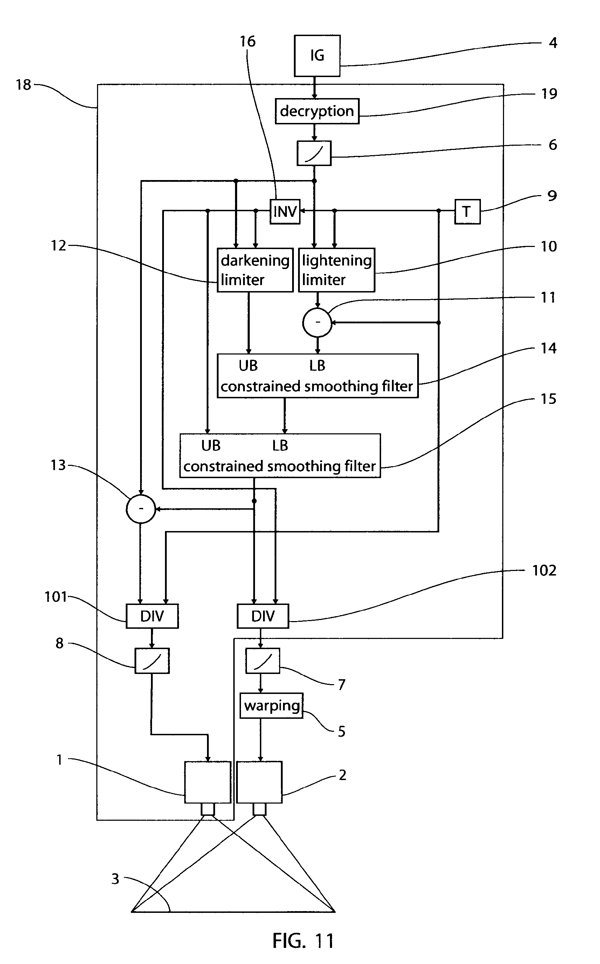

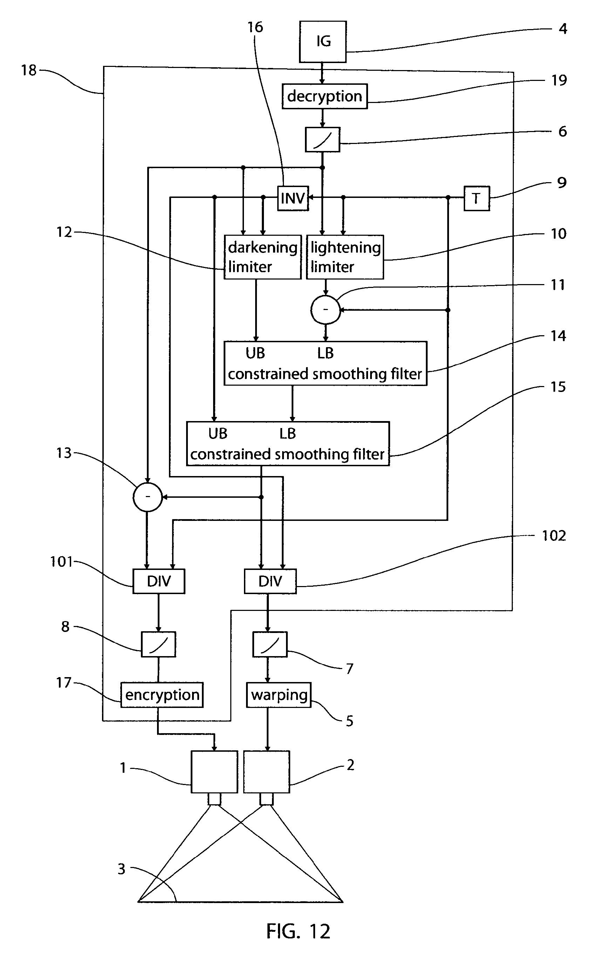

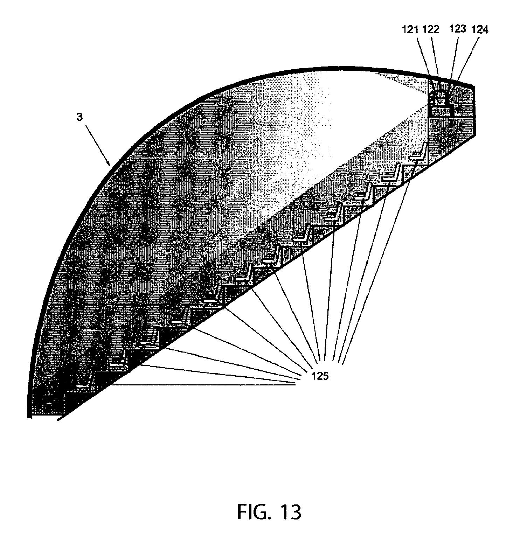

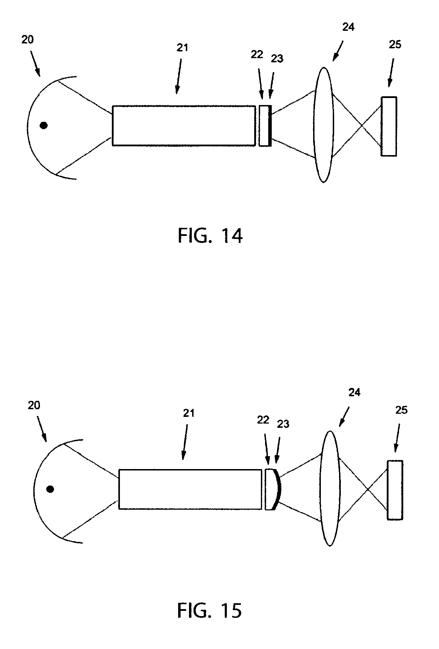

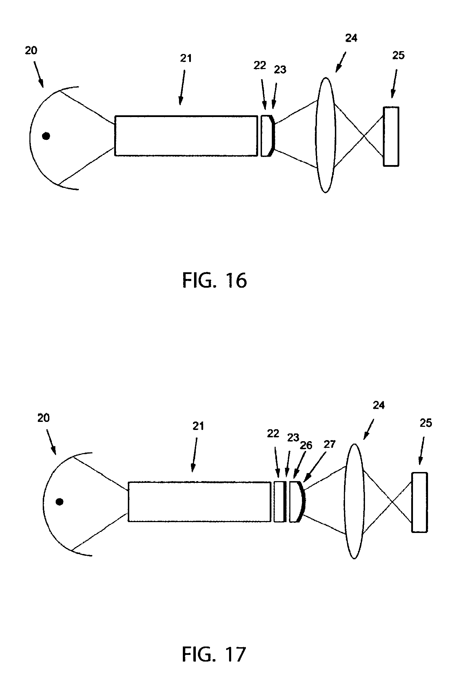

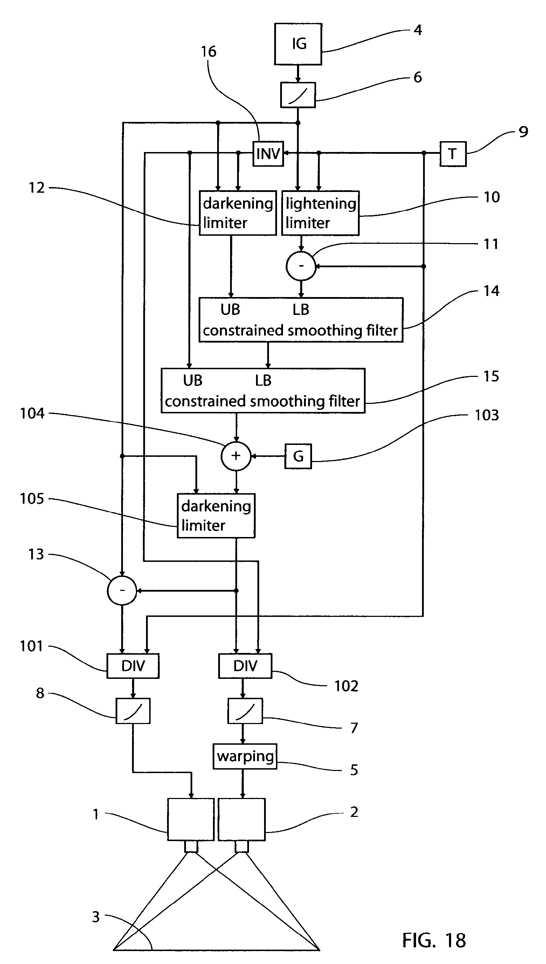

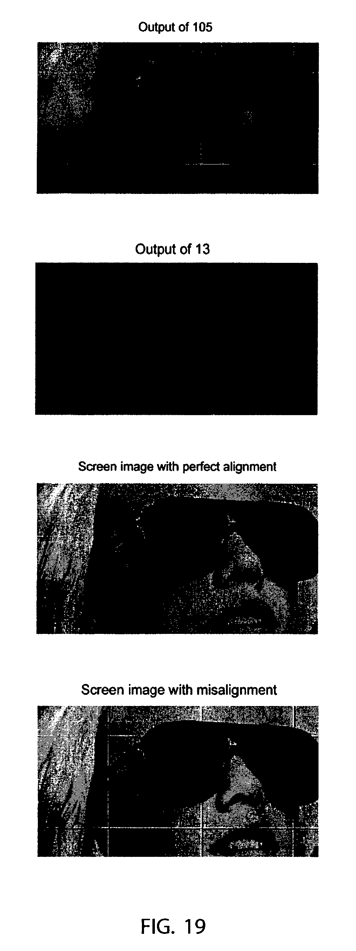

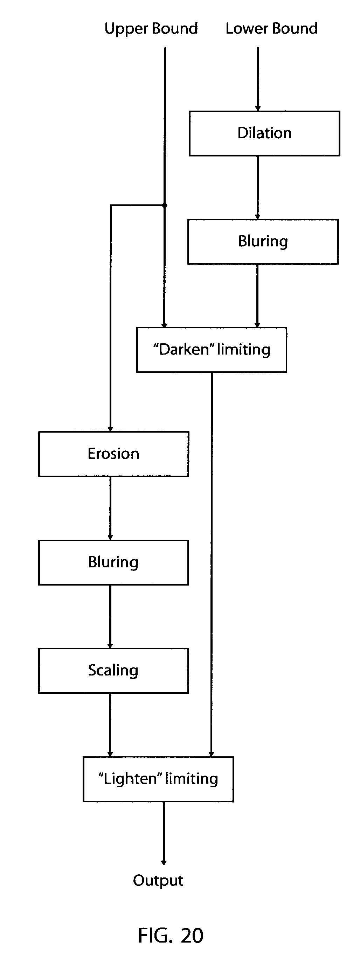

The subject-matter of the invention is defined by the independent claims 1 and 18 with further embodiments as defined by the dependent claims. The following "aspects", "methods", "systems", "advantages", "points characterizing the invention", etc. correspond to examples of the invention as filed. They do not necessarily correspond to embodiments as claimed in the patent granted. For an embodiment of the invention as claimed, the reader is referred to Fig. 2.

### GENERAL DESCRIPTION

The above objects are according to a first aspect of the present invention met by a method for producing a first output image and a second output image for being projected by a first projector and a second projector, respectively, the method comprising:
(a) providing a source image comprising a plurality of pixels, each pixel having an source value,
(b) providing a threshold value for each pixel of the plurality of pixels, in a first alternative
(d) generating a temporary image comprising a temporary value for each pixel of the plurality of pixels, the temporary value being generated in a process equivalent to: (i.i) determining a first maximum value as the maximum of the source value and its corresponding threshold value for each pixel, (i.ii) determining an intermediate value by subtracting the corresponding threshold value from the first maximum value for each pixel, (i.iii) generating the temporary value from the intermediate value for each pixel;
or in a second alternative
(c) providing an inverted threshold value for each pixel of the plurality of pixels, each inverted threshold value being an inversion of its corresponding threshold value,
(d) generating a temporary image comprising a temporary value for each pixel of the plurality of pixels, the temporary value being generated in a process equivalent to: (i.i) determining an intermediate value as the minimum of the source value and its corresponding inverted threshold value for each pixel, (i.ii) generating the temporary value from the intermediate value for each pixel;
or in a third alternative
(c) providing an inverted threshold value for each pixel of the plurality of pixels, each inverted threshold value being an inversion of its corresponding threshold value,
(d) generating a temporary image comprising a temporary value for each pixel of the plurality of pixels, the temporary value being generated in a process equivalent to: (i.i) determining a first maximum value as the maximum of the source value and its corresponding threshold value for each pixel, (i.ii) determining a first difference value by subtracting the corresponding threshold value from the first maximum value for each pixel, (i.iii) determining a first minimum value as the minimum of the source value and its corresponding inverted threshold value for each pixel, (i.iv) determining an intermediate value as the minimum of the first difference value and the first minimum value for each pixel, (i.v) generating the temporary value from the intermediate value for each pixel;
or in a fourth alternative
(c) providing an inverted threshold value for each pixel of the plurality of pixels, each inverted threshold value being an inversion of its corresponding threshold value,
(d) generating a temporary image comprising a temporary value for each pixel of the plurality of pixels, the temporary value being generated in a process equivalent to: (i.i) determining a first maximum value as the maximum of the source value and its corresponding threshold value for each pixel, (i.ii) determining a first difference value by subtracting the corresponding threshold value from the first maximum value for each pixel, (i.iii) determining a first minimum value as the minimum of the source value and its corresponding inverted threshold value for each pixel, (i.iv) determining an intermediate value from a first range of values comprising values between the first difference value and the first minimum value for each pixel, (i.v) generating the temporary value from the intermediate value for each pixel;
and in all alternatives
(e) generating the first output image comprising a first output value for each pixel of the plurality of pixels, the first output value being generated from the temporary value and the source value for each pixel, and
(f) generating the second output image comprising a second output value for each pixel of the plurality of pixels, the second output value being generated from the temporary value.

The method according to the first aspect of the present invention may further comprise in the first alternative:
(c) providing an inverted threshold values for each pixel of the plurality of pixels, each inverted threshold value being an inversion of its corresponding threshold value.

The threshold value for each pixel of said plurality of pixels may be limited to be within an interval having a maximum threshold value and a minimum threshold value for each pixel. Each inverted threshold value being an inversion of its corresponding threshold value may be understood as equivalent to the inverted threshold value being equal to or approximately equal to the maximum threshold value minus the threshold value for each pixel.

The process of generating the temporary value may further comprise in all alternatives: (i.vi) smoothing the intermediate value for each pixel; and in the third and fourth alternatives: (i.vi) smoothing the first difference value and/or the first minimum value.

Smoothing the intermediate value of a pixel is here understood to involve the intermediate value of at least one other pixel, for example a neighbouring pixel. Smoothing the first difference value of a pixel is here understood to involve the first difference value of at least one other pixel, for example a neighbouring pixel. Smoothing the first minimum value of a pixel is here understood to involve the first minimum value of at least one other pixel, for example a neighbouring pixel. The smoothing may comprise a spline filter, a membrane filter, and/or an envelope filter.

The smoothing may be adapted for limiting the intermediate value to a value from the first range of values subsequent to the smoothing. The smoothing may comprise a first dilation operation comprising a first dilation radius. The first dilation radius may be 4 pixels, or approximately 0.3% of the width of the temporary image. The smoothing may comprise a first blur operation. The first dilation operation may be performed prior to the first blur operation. The first blur operation may comprise a first blur radius approximately equal to or smaller than the first dilation radius. The first blur operation may comprise a first Gaussian blur operation. The first Gaussian blur operation may have a standard deviation approximately equal to a third of the first blur radius, or approximately equal to or smaller than 4/3 pixels, or approximately 0.1 % of the width of the temporary image. The first blur operation may comprise a first mean filtering operation.

The process generating the temporary value may further comprise: (i.vii) determining a second minimum value as the minimum of the intermediate value and the inverted threshold value for each pixel, (i.viii) generating a second smoothed value by smoothing the second minimum value for each pixel, and (i.ix) generating the temporary value from the second smoothed value for each pixel.

Smoothing the second minimum value of a pixel is here understood to involve the second minimum value of at least one other pixel, for example a neighbouring pixel. The smoothing of the second minimum value may comprise a spline filter, a membrane filter, and/or an envelope filter.

The smoothing of the second minimum value may comprise a second dilation operation comprising a second dilation radius. The second dilation radius may be 2 pixels, or approximately 0.17% of the width of the temporary image. The second dilation radius may be variable. The second dilation radius may be variable in a second range of values including zero. The smoothing of the second minimum value may comprise a second blur operation. The second dilation operation may be performed prior to the second blur operation. The second blur operation may comprise a second blur radius approximately equal to or smaller than the second dilation radius. The second blur radius may be variable. The second blur radius may be variable in a third range of values including zero. The second blur radius and the second dilation radius may be coupled such that one changes as a function of the other.

The second blur operation may comprise a second Gaussian blur operation. The second Gaussian blur operation may have a standard deviation approximately equal to a third of the first blur radius, or approximately equal to or smaller than 2/3 pixels, or approximately 0.055% of the width of the temporary image.

The second blur operation may comprise a second mean filtering operation.

Providing the source image may comprise: (ii.i) providing a gamma encoded source image encoded by a first gamma encoding, (ii.ii) generating a gamma decoded source image by performing a first gamma decoding of the gamma encoded source image, the gamma decoding corresponding to the first gamma encoding, and (ii.iii) outputting the gamma decoded source image as the source image.

The method according to the first aspect of the present invention may further comprise:
(g) performing a second gamma encoding of the first output image, the second gamma encoding corresponding to a second gamma decoding of the first projector.

The method according to the first aspect of the present invention may further comprise:
(h) performing a third gamma encoding of the second output image, the third gamma encoding corresponding to a third gamma decoding of the second projector.

The process of generating the temporary value may further comprise in all alternatives: (i.x) performing a first colour correction of the intermediate value for each pixel, and in the third and fourth alternatives: (i.x) performing a first colour correction of the intermediate and/or the first difference value for each pixel.

In all alternatives the first colour correction may be adapted for correcting the intermediate value to obtain approximately the same first hue as the corresponding source value and in the third and fourth alternative the first colour correction being adapted for correcting the first difference value and/or the intermediate value to obtain approximately the same first hue as the corresponding source value. The first colour correction may comprise a process equivalent to: (iii.i) calculating a constant K for each pixel, K being equal to the maximum of R11/R6, G11/G6, and B11/B6; R6, G6, and B6 are the pixel colours of the source image; and R11, G11, and B11 1 are the pixel colour values subsequent to determining the first intermediate value for each pixel, (iii.ii) correcting the intermediate value by replacing it with the source value multiplied with the constant K for each pixel.

The method according to the first aspect of the present invention may further comprise: (i) lowering the spatial resolution of the second output image and/or performing a blur operation on the second output image. The method according to the first aspect of the present invention may further comprise: (j) encrypting the first output image. The method according to the first aspect of the present invention may further comprise: (k) recording the first output image on a first recording medium. The method according to the first aspect of the present invention may further comprise: (l) extracting the first output image from the first recording medium. The method according to the first aspect of the present invention may further comprise: (m) recording the second output image on a second recording medium. The method according to the first aspect of the present invention may further comprise: (n) extracting the second output image from the second recording medium.

The method according to the first aspect of the present invention may further comprise: (o) performing a geometric correction of the second output image, the geometric correction being adapted for aligning an image projected by the second projector with an image projected by the first projector.

The process of generating the temporary value may further comprise: (i.xi) performing an erosion operation, preferably a grey scale erosion operation having a radius a half pixel, a full pixel, 0.04% of the width of temporary image, or 0.08% of the width of temporary image, on the intermediate value for each pixel of the plurality of pixels.

In the fourth alternative, the source value may be excluded from the first range of values for each pixel. In the fourth alternative, the first range of values may further comprise the first difference value and the first minimum value.

The first output value may be generated for each pixel in a process equivalent to: (iv.i) determining a second difference value by subtracting the temporary value from the source value for each pixel, and (iv.ii) generating the first output value from the second difference value.

The first output value may be generated for each pixel in a process equivalent to: (iv.i) determining a second difference value by subtracting the temporary value from the source value for each pixel, (iv.ii) generating a first ratio by dividing the second difference value by the threshold value for each pixel, and (iv.iii) generating the first output value from the first ratio for each pixel.

The second output value may further be generated from the inverted threshold value. The second output value may be generated for each pixel in a process equivalent to: (v.i) generating a second ratio by dividing the temporary value by the inverted threshold value for each pixel, and (v.ii) generating the second output value from the second ratio for each pixel.

The threshold value for each pixel of the plurality of pixels may represent the fraction of the total illumination intensity which the first projector contributes to at the corresponding position on the projection surface in a projection of a uniform and maximum intensity image from the first projector and the second projector, or in a projection of a uniform and maximum intensity image from each the first projector and the second projector, or in a projection of a uniform and maximum intensity image from the first projector, or in a projection of a uniform and maximum intensity image from the second projector.

The threshold value for each pixel of the plurality of pixels may be derived by dividing the total illumination intensity, which the first projector contributes to at the corresponding position on the projection surface by the combined total illumination intensity from each of the first projector and the second projector at the corresponding position in a projection of a uniform and maximum intensity image.

The method according to the first aspect of the present invention may further comprise:
(p) adjusting the temporary image to include an alignment pattern.

The method according to the first aspect of the present invention may further comprise:
(q) providing the alignment pattern,
(r) adjusting the temporary image by adding the alignment pattern to the temporary image,
(s) adjusting the temporary image by a process equivalent to: (vi.i) determining a fourth minimum value as the minimum of the temporary value and its corresponding source value for each pixel, and (vi.ii) adjusting the temporary value to the fourth minimum value for each pixel.

The alignment pattern may comprise a grid, a mesh, a barcode, and/or a semacode, and alternatively or additionally the alignment pattern comprising a regular pattern of elements, and/or an irregular pattern of elements, and alternatively or additionally the alignment pattern comprising a regular pattern of dots and/or cross hairs, and/or an irregular pattern of elements of dots and/or cross hairs.

The above objects are according to a second aspect of the present invention met by a method for double stacking a first output image and a second output image on a projection surface by a first projector and a second projector, the method comprising:
(aa) positioning and orienting the first projector and the second projector for overlaying the first output image and the second output image on the projection surface,
(ab) producing the first output image and the second output image by the method according to the first aspect of the present invention,
(ac) supplying the first output image and the second output image to the first projector and the second projector, respectively, and
(ad ) projecting the first output image and the second output image by the first projector and the second projector, respectively.

The first projector and the second projector may generate a superimposed image on the projection surface. The method according to the second aspect of the present invention may further comprise:
(ae) recording a first captured image of the superimposed image,
(af) determining a first contribution of the first projector to the first captured image,
(ag) generating a first feedback image from the first contribution,
(ah) generating a first set of misalignment vectors from the first feedback image and the first output image by a feature tracking and/or feature matching,
(ai) generating a first warped image of the first captured image by a first warping comprising the first set of misalignment vectors,
(aj) generating a second feedback image by subtracting the first output image from the first warped image,
(ak) generating a second set of misalignment vectors from the second feedback image and the second output image by a feature tracking and/or feature matching,
(al) generating a third set of misalignment vectors from the first set of misalignment vectors and the second set of misalignment vectors, and
(am) deriving a first geometric correction of the first output image and/or the second output image from the third set of misalignment vectors.

Determining the first contribution of the first projector may comprise a high pass filtering of the first captured image.

The above objects are according to a third aspect of the present invention met by a method for deriving a correction of a double stacking of a first output image and a second output image on a projection surface by a first projector and a second projector, the method comprising:
(ba) positioning and orienting the first projector and the second projector for overlaying the first output image and the second output image on the projection surface,
(bb) producing a first output for a first source image, the first output comprising the first output image and the second output image produced by the method according to an example of the first aspect of the present invention including an alignment pattern for the first source image,
(bc) supplying the first output image and the second output image of the first output to the first projector and the second projector, respectively, and
(bd) projecting the first output image and the second output image of the first output by the first projector and the second projector, respectively, on the projection surface,
(be) recording a first captured image comprising the first output image and the second output image of the first output projected on the projection surface,
(bf) detecting a contribution of the misalignment pattern of the first output in the first captured image
(bg) deriving a geometric correction for the second output image from the detected contribution of the misalignment pattern of the first output.

The method according the second aspect of the present invention may further comprise:
(bh) producing a second output for a second source image for being displayed subsequent to the first source image, the second output comprising the first output image and the second output image produced by the method according to an example of the first aspect of the present invention including an alignment pattern for the second source image,
(bi) supplying the second output image and the second output image of the second output to the first projector and the second projector, respectively, and
(bj) projecting the second output image and the second output image of the second output by the first projector and the second projector, respectively, on the projection surface,
(bk) recording a second captured image comprising the first output image and the second output image of the second output projected on the projection surface,
(bl) detecting a contribution of the misalignment pattern of the second output in the second captured image,
(bm) deriving a geometric correction for the second output image from the detected contribution of the misalignment pattern of the second output.

The method according the second aspect of the present invention may further comprise:
(bh) producing a second output for a second source image for being displayed subsequent to the first source image, the second output comprising the first output image and the second output image produced by the method according to an example of the first aspect of the present invention including an alignment pattern for the second source image,
(bi) supplying the second output image and the second output image of the second output to the first projector and the second projector, respectively, and
(bj) projecting the second output image and the second output image of the second output by the first projector and the second projector, respectively, on the projection surface,
(bk) recording the first captured image comprising the first output image and the second output image of the second output projected on the projection surface, (bl) detecting a contribution of the misalignment pattern of the first output in the first captured image further comprising detecting a contribution of the misalignment pattern of the second output in the first captured image,
(bm) deriving a geometric correction for the second output image from the detected contribution of the misalignment pattern of the first output and the second output.

Detecting a contribution of the misalignment pattern of the first output in the first captured image and detecting the contribution of the misalignment pattern of the second output in the second captured image may further comprise a time averaging of the first captured image and the second captured image. Detecting of a contribution of the misalignment pattern of the first output and the second output may comprise high pass filtering.

The misalignment pattern of the first output and the misalignment pattern of the second output may be the same. The misalignment pattern of the first output and the misalignment pattern of the second output may be different. The misalignment pattern of the second output may be generated from the misalignment pattern of the first output. The misalignment pattern of the second output and the misalignment pattern of the first output may be generated by a cyclic function, the cyclic function being periodic as a function of time.

The above objects are according to a fourth aspect of the present invention met by a method for producing a first output image and a second output image of a first colour for being projected by a first projector and a second projector, and for producing a first output image and a second output image of a second colour for being projected by the first projector and the second projector, the method comprising:
(ca) producing the first output image and the second output image of the first colour by the method according to the first aspect of the present invention, and
(cb) producing the first output image and the second output image of the second colour by the method according to the first aspect of the present invention.

The above objects are according to a fifth aspect of the present invention met by a method for producing a first output image and a second output image of a first colour for being projected by a first projector and a second projector for projecting the first colour, and for producing and a first output image and a second output image of a second colour for being projected by a first projector and a second projector for projecting the second colour, the method comprising:
(ca) producing the first output image and the second output image of the first colour by the method according to the first aspect of the present invention, and
(cb) producing the first output image and the second output image of the second colour by the method according to an example of the first aspect of the present invention including an alignment pattern.

The first colour and the second colour may represent the left and right colours of stereoscopic image. The first colour and the second colour may represent two colours of a colour model, for example the RGB colour model.

In the fourth and fifth aspects of the present invention, the producing of the first output image and the second output image of the first colour may be performed by the method according to an example of the first aspect of the present invention including an alignment pattern. The first colour may represent shorter light wavelengths than the second colour. The first colour may represent blue and the second colour may represent green, yellow, or red.

The producing of the first output image and the second output image of the second colour may be performed by the method according to an example of the first aspect of the present invention including an alignment pattern the alignment pattern in producing the first output image and the second output image of the first colour and the alignment pattern in producing the first output image and the second output image of the second colour may have the same or approximately the same shape. The alignment pattern in producing the first output image and the second output image of the first colour and the alignment pattern in producing the first output image and the second output image of the second colour may have the same or approximately the same dimensions.

The method according to the fourth aspect of the present invention may further be adapted for producing a first output image and a second output image of a third colour for being projected by the first projector and the second projector, the method may further comprise:
(cc) producing the first output image and the second output image of the third colour by the method according to the first aspect of the present invention.

The first colour, the second colour, and the third colour may represent three colours of a colour model, for example the RGB colour model.

The method according to the fourth and fifth aspect of the present invention may further be adapted for producing a first output image and a second output image of a third colour for being projected by a first projector and a second projector for projecting the third colour, the method may further comprise:
(cc) producing the first output image and the second output image of the third colour by the method according to the first aspect of the present invention.

A first source value of a first pixel of the source image may represent the first colour, a second source value of a second pixel of the source image may represent the second colour, and a third source value of a third pixel of the source image may represent the third colour, the colours of the first, second and third pixels may define a second hue; a first intermediate value may be the intermediate value of the first pixel, a second intermediate value may be the intermediate value of the second pixel, and a third intermediate value may be the intermediate value of the third pixel defining a third hue, the method may further comprise:
(cd) subjecting the first, second, and third intermediate values to a colour adjustment.

The colour adjustment may be adapted for adjusting the first, second, and third intermediate values to define the third hue being equal to or approximately equal to the second hue. The colour adjustment may be equivalent to: (vii.i) calculating a first fraction as the first intermediate value divided by the first source value, (vii.ii) calculating a second fraction as the second intermediate value divided by the second source value, (vii.iii) calculating a third fraction as the third intermediate value divided by the third source value, (vii.iv) calculating a second maximum value as the maximum of the first, second, and third fractions, (vii.v) replacing the first intermediate value by the first source value multiplied by the second maximum value, (vii.vi) replacing the second intermediate value by the second source value multiplied by the second maximum value, and (vii.vii) replacing the third intermediate value by the third source value multiplied by the second maximum value.

The above objects are according to a sixth aspect of the present invention met by a system for producing a first output image and a second output image for being projected by a first projector and a second projector, respectively, the system comprising a computer and/or one or more circuits for performing the method according to the first aspect of the present invention. The system according to the sixth aspect of the present invention may further comprise an image source for providing the source image according to the first aspect of the present invention.

The above objects are according to a seventh aspect of the present invention met by a system for double stacking a first output image and a second output image, the system comprising a first projector, a second projector, and a computer and/or one or more circuits for performing the method according to the second aspect of the present invention. The system according to the seventh aspect of the present invention may further comprise an image source for providing the source image according to the second aspect of the present invention. The system according to the seventh aspect of the present invention may further comprise a camera for recording the first captured image of the superimposed image the second aspect of the present invention.

The above objects are according to an eighth aspect of the present invention met by a system for deriving a correction of a double stacking of a first output image and a second output image, the system comprising a first projector, a second projector, and a computer and/or one or more circuits for performing the method according to the third aspect of the present invention, the system further comprising a camera for recording the second captured image of the superimposed image.

The above objects are according to an ninth aspect of the present invention met by a system for producing a first output image and a second output image of a first colour for being projected by a first projector and a second projector and a first output image and a second output image of a second colour for being projected by the first projector and the second projector, the system comprising a computer and/or one or more circuits for performing the method according to the fifth and/or the sixth aspect of the present invention.

The above objects are according to a tenth aspect of the present invention met by a system for producing a first output image and a second output image of a first colour for being projected by a first projector and a second projector for projecting the first colour and a first output image and a second output image of a second colour for being projected by a first projector and a second projector for projecting the second colour, the system comprising a computer and/or one or more circuits for performing the method according to the fifth aspect of the present invention.

The above objects are according to an eleventh aspect of the present invention met by a projection system comprising a first projector and a second projector, the first projector comprising: a first lamp, a first integrating rod having an input end and an output end, the first integrating rod being configured for receiving light from the first lamp through the input end and generate a uniform illumination at the output end, a first projector filter configured to filter the uniform illumination at the output end of the integrating rod, a first spatial light modulator chip, a first illumination system for imaging the first projector filter on the light modulator chip, a first exit pupil through which light from the a first spatial light modulator chip exits the first projector; the second projector comprising: a second integrating rod having an input end and an output end, the second integrating rod being configured for receiving light from the second lamp through the input end and generate a uniform illumination at the output end, a second projector filter configured to filter the uniform illumination at the output end of the integrating rod, a second spatial light modulator chip, a second illumination system for imaging the second projector filter on the light modulator chip, a second exit pupil through which light from the a second spatial light modulator chip exits the second projector, the first projector filter being configured to wavelength shift the light exiting through the first exit pupil, and the second projector filter being configured to wavelength shift the light exiting the through the second exit pupil.

The first projector filter may define a first pass band and a first guard band, and the second projector filter may define a second pass band not overlapping the first pass band, and a second guard band may overlap the first guard band.

The first projector filter may define a first band stop and the first projector may further comprise: a first auxiliary filter configured to filter the uniform illumination from the output end of the first integrating and defining a first pass band and a first guard band, and the first band stop may match or approximately match the first guard band; and the second projector filter may define a second pass band not overlapping the first pass band and a second guard band overlapping the first guard band.

The first projector filter may define a first band stop and the first projector may further comprise: a first auxiliary filter configured to filter the uniform illumination from the output end of the first integrating and defining a first pass band and a first guard band, and the first band stop may match or approximately match the first guard band, and the second projector filter may define a second band stop; and the second projector may further comprise: a second auxiliary filter configured to filter the uniform illumination from the output end of the second integrating and defining a second pass band not overlapping the first pass band and a second guard band overlapping the first guard band, and the second band stop may match or approximately match the second guard band.

The second auxiliary filter may be flat and may have a second uniform thickness. The first auxiliary filter may be flat and may have a first uniform thickness.

The first projector filter may define a first uniform thickness and/or the second projector filter may define a second uniform thickness. The first projector filter may have a first varying thickness and/or the second projector filter may have a second varying thickness. The first projector filter may define a first curvature and/or the second projector filter may define a second curvature. The first projector filter may define a first flat area in a first central portion of the first projector filter, and/or the second projector filter may define a second flat area in a second central portion of the second projector filter. The first projector filter may define a first curved shape in a first peripheral portion of the first projector filter, and/or the second projector filter may define a second curved shape in a second peripheral portion of the second projector filter. The first projector filter may rest on a first transparent substrate, preferably a first glass substrate, and/or the second projector filter may rest on a second transparent substrate, preferably a second glass substrate. The first projector filter may be dichroic, and/or the second projector filter may be dichroic.

The first projector filter may be located at the output end of the first integrating rod and/or the second projector filter may be located at the output end of the second integrating rod. The first integrating rod may defining a first aperture having a first width at the output end and the first projector filter may define a first spherical surface having a first radius equal to or approximately equal to the first width, and/or the second integrating rod may define a second aperture having a second width at the output end and the second projector filter may define a second spherical surface having a second radius equal to or approximately equal to the second width.

The above objects are according to an twelfth aspect of the present invention met by a system for producing a series of three-dimensional images comprising: a computer and/or one or more circuits for producing left output comprising first output images and second output images by repeatedly applying the method according to the first aspect of the present invention, and the computer and/or the one or more circuits further being adapted for producing right output comprising first output images and second output images by repeatedly applying the method according to the first aspect of the present invention, the left output representing left perspective images of the series three-dimensional images and the right output representing corresponding right perspective images of the series three-dimensional images; a projection screen; a left perspective first projector coupled to the computer and/or one or more circuits and configured for projecting the first output images of the left output on the projection screen; a right perspective first projector coupled to the computer and/or one or more circuits and configured for projecting the first output images of the right output on the projection screen; and a left/right perspective second projector coupled to the computer and/or one or more circuits and configured for alternatingly projecting the second output images of the left output and the second output images of the right output own the projection screen.

The above objects are according to an twelfth aspect of the present invention met by a system for producing a series of three-dimensional images comprising: a computer and/or one or more circuits for producing left output comprising first output images and second output images by repeatedly applying the method according to the first aspect of the present invention, and the computer and/or the one or more circuits further being adapted for producing right output comprising first output images and second output images by repeatedly applying the method according to the first aspect of the present invention, the left output representing left perspective images of the series three-dimensional images and the right output representing corresponding right perspective images of the series three-dimensional images; a projection screen; a left perspective first projector coupled to the computer and/or one or more circuits and configured for projecting the first output images of the left output on the projection screen; a right perspective first projector coupled to the computer and/or one or more circuits and configured for projecting the first output images of the right output on the projection screen; a left perspective second projector coupled to the computer and/or one or more circuits and configured for projecting the second output images of the left output the projection screen; and a right perspective second projector coupled to the computer and/or one or more circuits and configured for projecting the second output images of the right output on the projection screen.

In the twelfth aspect and/or thirteenth aspect the left perspective first projector may comprise a left polarization filter for polarizing light projected by the left perspective first projector and the right perspective first projector may comprise a right polarization filter for polarizing light projected by the right perspective first projector.

The left polarization filter and the right polarization filter may have orthogonal or approximately orthogonal polarization directions. The left polarization filter and the right polarization filter may have opposite circular polarization directions. The projection screen may be being non-depolarizing. The systems according the twelfth aspect and/or thirteenth aspect may further comprise a temporal varying polarization unit.

The above objects are according to a fourteenth aspect of the present invention met by a method for producing a first output image and a second output image for being projected by a first projector and a second projector, respectively, the method comprising:
(a) providing a source image comprising a plurality of pixels, each pixel having a source value,
(b) providing a threshold value for each pixel of the plurality of pixels, and in a first alternative
(c) providing an inverted threshold value for each pixel of the plurality of pixels, each inverted threshold value being an inversion of its corresponding threshold value,
(d) generating a temporary image comprising a temporary value for each pixel of the plurality of pixels, the temporary value being generated in a process equivalent to: (i.i) determining a first maximum value as the maximum of the source value and its corresponding threshold value for each pixel, (i.ii) determining a first difference value by subtracting the corresponding threshold value from the first maximum value for each pixel, (i.iii) determining a first minimum value as the minimum of the source value and its corresponding inverted threshold value for each pixel, (i.iv) determining a first process value as the minimum of the first difference value and the first minimum value for each pixel, or alternatively determining a first process value from an intermediate range of values comprising values between the first difference value and the first minimum value for each pixel, (i.v) generating a second process value from the first minimum value, (i.vi) determining an intermediate value as the maximum of the first process value and the second process value for each pixel, or alternatively determining an intermediate value from a first range of values comprising values between the first process value and the second process value for each pixel, (i.vii) generating the temporary value from the intermediate value for each pixel; (e) generating the first output image comprising a first output value for each pixel of the plurality of pixels, the first output value being generated from the temporary value and the source value for each pixel, and (f) generating the second output image comprising a second output value for each pixel of the plurality of pixels, the second output value being generated from the temporary value.

The determining of the intermediate value from the first range of values may comprise the mean value of the first process value and the second process value. The first range is here understood to encompass an abstract range, i.e. that the determining of the intermediate value from the first range of values only limits the intermediate value to be between the first process value and the second process value.

The first and second process values allow for the distribution of emitted light energy between projectors to be balanced, which has several advantages. For example lower peak temperatures in projector optics and better support for camera based automatic alignment systems may be achieved. Further, speckle pattern artefacts may be reduced when the first and second projectors are laser illuminated projectors.

The process of generating the temporary value may further comprise: (i.viii) performing an intermediate erosion operation on the second process value for each pixel of the plurality of pixels. The intermediate erosion operation may be a grey scale erosion operation. The intermediate erosion operation may comprise an erosion radius.

The intermediate erosion operation may have an erosion radius in one or more of the closed ranges 2 pixels to 20 pixels, 4 pixels to 18 pixels, 6 pixels to 16 pixels, 8 pixels to 14 pixels, and 10 pixels to 12 pixels, preferably 12 pixels; and/or in one or more of the closed ranges 2 pixels to 4 pixels, 4 pixels to 6 pixels, 6 pixels to 8 pixels, 8 pixels to 10 pixels, 10 pixels to 12 pixels, 12 pixels to 14 pixels, 14 pixels to 16 pixels, 16 pixels to 18 pixels, and 18 pixels to 20 pixels; and/or in one or more of the closed ranges, 0.04% to 0.06% of the width of temporary image, 0.04% to 0.06% of the width of temporary image, 0.06% to 0.08% of the width of temporary image, 0.08% to 0.10% of the width of temporary image, 0.10% to 0.12% of the width of temporary image, 0.08% to 0.10% of the width of temporary image, 0.12% to 0.14% of the width of temporary image, 0.14% to 0.16% of the width of temporary image, 0.16% to 0.18% of the width of temporary image, and/or 0.18% to 0.20% of the width of temporary image, preferably 0.10% of the width of temporary image.

The process of generating the temporary value may further comprise: (i.ix) smoothing the second process value. The smoothing of the second process value may comprise a spline filter, a membrane filter, and/or an envelope filter. The smoothing of the second process value may be adapted for limiting the second process value to a value from the intermediate range of values subsequent to the smoothing. The smoothing of the second process value may comprise an intermediate blur operation. The intermediate blur operation may comprise an intermediate blur radius approximately equal to the erosion radius. The intermediate blur operation may comprise an intermediate Gaussian blur operation and/or an intermediate mean filtering operation.

The process of generating the temporary value may further comprise: (i.x) scaling the second process value by a scaling factor. The scaling factor may be approximately 0.5.

The performing of the intermediate erosion operation may be performed prior to the smoothing of the second process value. The smoothing of the second process value may be performed prior to the scaling of the second process value.

The fourteenth aspect of the present invention may further comprise any individual feature or any combination of features described in relation to the first aspect of the present invention.

The above objects are according to a fifteenth aspect of the present invention met by a method for double stacking a first output image and a second output image on a projection surface by a first projector and a second projector, the method comprising:
(aa) positioning and orienting the first projector and the second projector for overlaying the first output image and the second output image on the projection surface,
(ab) producing the first output image and the second output image by the method according to the fourteenth aspect of the present invention,
(ac) supplying the first output image and the second output image to the first projector and the second projector, respectively, and
(ad) projecting the first output image and the second output image by the first projector and the second projector, respectively.

The fifteenth aspect of the present invention may further comprise any individual feature or any combination of features described in relation to the second aspect of the present invention.

The above objects are according to a sixteenth aspect of the present invention met by a method for producing a first output image and a second output image of a first colour for being projected by a first projector and a second projector, and for producing a first output image and a second output image of a second colour for being projected by the first projector and the second projector, the method comprising:
(ca) producing the first output image and the second output image of the first colour by the method according to the fourteenth aspect of the present invention, and
(cb) producing the first output image and the second output image of the second colour by the method according to the fourteenth aspect of the present invention.

The sixteenth aspect of the present invention may further comprise any individual feature or any combination of features described in relation to the fourth and fifth aspects of the present invention.

The above objects are according to a seventeenth aspect of the present invention met by a system for producing a first output image and a second output image for being projected by a first projector and a second projector, respectively, the system comprising a computer and/or one or more circuits for performing the method according to the fourteenth aspect of the present invention.

The above objects are according to a eighteenth aspect of the present invention met by a system for double stacking a first output image and a second output image, the system comprising a first projector, a second projector, and a computer and/or one or more circuits for performing the method according to the fifteenth aspect of the present invention.

The above objects are according to a nineteenth aspect of the present invention met by a system for producing a first output image and a second output image of a first colour for being projected by a first projector and a second projector and a first output image and a second output image of a second colour for being projected by the first projector and the second projector, the system comprising a computer and/or one or more circuits for performing the method according to a sixteenth aspect of the present invention.

The systems according to the seventeenth to nineteenth aspects of the present invention may be characterized by the first projector being a first laser illuminated projector and/or the second projector being a second laser illuminated projector.

In the description above the same nomenclature has generally been used for features having the same or related functions or effects.

### BRIEF DESCRIPTION OF THE ILLUSTRATIONS

A multitude of embodiments of the different aspects of the present invention are depicted in the illustrations, where:
ILL.1 illustrates an example of the prior art,
ILL.2 illustrates a preferred embodiment of the present invention,
ILL.3 illustrates details of the preferred embodiment,
ILLS.4-7 illustrate different pixel values generated in the preferred embodiment.
ILLS.8-9 illustrate examples of different outputs of the preferred embodiment,
ILLS.10-12 illustrate alternative embodiments of the present invention,
ILL.13 illustrates an immersive stereoscopic projection configuration,
ILLS.14-17 illustrate a preferred embodiment of a projection system according to the present invention,
ILL.18 illustrates an alternative embodiment of the present invention,
ILL.19 illustrates the processing and output of the alternative embodiment described in relation to ILL.18, and
ILL. 20 illustrates details of an alternative embodiment.

### DESCRIPTION OF THE INVENTION

The present invention is described below in terms of exemplary configurations but is not intended to be regarded as limited to those. For the sake of explanation, greyscale projection systems are used to describe the present invention, whereas the configurations described may as well be applied to each of the colour planes of a tristimulus (for example RGB) colour projection system, and, using standard colour space conversion techniques, further be used for projection systems using other colour spaces (for example YPbPr). Further, colour correction circuits for adapting for example hue adjustment, black points and white points etc. between source image signals and projectors may obviously be included. Still, image projection systems are used in several descriptions, whereas the described configurations may as well operate on a sequence of still images constituting a moving image. Monoscopic projection systems are used in the description, but the invention may as well apply to a set of projection systems used for stereoscopic applications or to active stereoscopic projectors with separate left eye and right eye inputs or with double frame rate inputs. Pixel values are described as being in the range from 0 to 1, whereas in practical implementations other ranges will likely be chosen. Operations are described as being performed by separate circuits, whereas in practical implementation they will likely be implemented as software algorithms, lookup tables etc. in computer memory or graphics card memory. Further modifications, additions and alternative configurations obvious to a person skilled in the art are intended to be included in the scope of the invention.

Illustration 1 shows a schematic view of a configuration of prior art, a traditional double stacking comprising essentially identical projectors, a first projector 1 and a second projector 2, each projecting an image onto a projection surface 3 and each having a decoding gamma function corresponding to the encoding gamma of an image generator 4, which is outputting a source image signal comprising an array of pixel values. The connecting lines in the schematic view illustrate image signal paths. The output of the image generator is supplied to the input of the first projector 1 and to the input of a warping circuit 5. The output of the warping circuit 5 is supplied to the input of the second projector 2. The warping circuit 5 performs a geometrical correction of the image projected by the second projector 2 to align it with the image projected by projector 1 and compensate for mechanical misalignment between projected images. Repeated re-calibrations may be needed to compensate for movements in mechanical and optical parts due to thermal variations etc.

Illustration 2 shows a schematic view of a first embodiment of the invention. To the configuration of illustration 1 has been added an image splitting function comprising a gamma decoding circuit 6, a first gamma encoding circuit 7, a second gamma encoding circuit 8, an image buffer 9, a lightening image limiter 10, a first image subtraction circuit 11, a darkening image limiter 12, a second image subtraction circuit 13, a first constrained smoothing filter 14, a second constrained smoothing filter 15, an image inversion circuit 16, a first image division circuit 101 and a second image division circuit 102, all connected as shown in the illustration.

The gamma decoding circuit 6 is matched to the encoding gamma of the image generator 4, the first gamma encoding circuit 7 is matched to the decoding gamma of the second projector 2 and the second gamma encoding circuit 8 is matched to the decoding gamma of the first projector 1. Thus, all operations in the circuit between the output of gamma decoding circuit 6, the first gamma encoding circuit 7 and the second gamma encoding circuit 8 are performed at a gamma of unity, meaning that pixel values represent linear intensities, and the resulting superimposed illumination intensity in a point of the projection surface 3 is a function of the sum of the corresponding pixel values in the images being input to the first gamma encoding circuit 7 and to the second gamma encoding circuit 8.

The image buffer 9 stores a threshold image T which holds for each pixel value a representation of the fraction of illumination intensity which the first projector 1 is contributing to the corresponding position on the projection surface 3 when both projectors are supplied uniform, maximum intensity images to their inputs. Since in this embodiment the first projector 1 and the second projector 2 are essentially identical, the first projector 1 contributes half the illumination intensity in all positions, and all pixel values in T are 0.5. In an alternative configuration of this embodiment, the projectors are not identical but have different spatial distribution of their maximum illumination intensities; hence T is an image having pixels with varying values between 0 and 1.

The content T of the image buffer 9 and the output of the gamma decoding circuit 6 are supplied to the lightening limiter 10. The lightening image limiter 10 calculates an image that in every pixel position is the higher of the two inputs and it outputs the result to the first image subtraction circuit 11, which subtracts T and supplies the result to a lower bound image input LB of the constrained smoothing filter 14. The pixel values of this image represents the amount of intensity that the first projector 1 is not capable of reproducing alone, hence the minimum intensity the second projector 2 should contribute in the corresponding pixel position.

The content T of the image buffer 9 is supplied to the image inversion circuit 16 and the output of the image inversion circuit 16 is supplied to the darkening image limiter 12. Further, the output of the gamma decoding circuit 6 is supplied to the darkening image limiter 12. The darkening image limiter 12 calculates an image that in every pixel position is the lower of the two inputs and outputs the result to an upper bound image input UB of the constrained smoothing filter 14. This image represents the maximum intensity the second projector 2 should contribute, i.e. the desired resulting pixel intensities limited by the maximum intensity the second projector is able to contribute in the corresponding pixel position.

The first constrained smoothing filter 14 calculates a generally smooth, blurry output image with only few high frequency components and where the output image is essentially constrained in any pixel position to have a pixel value in the range from the corresponding pixel value in the lower bound image LB and the corresponding pixel value in the upper bound image. Illustration 3 shows a process flowchart of an exemplary configuration of the constrained smoothing filter 14. The constrained smoothing filter 14 performs a greyscale dilation operation with a dilation radius r1 on the lower bound input image LB followed by a blur operation with a blur radius r1' smaller than or equal to r1 on the result of the greyscale dilation operation, followed by a darkening image limiting operation with the upper bound input image UB on the result of the blur operation, limiting pixel values in the result of the blur operation to be smaller than or equal to the corresponding pixel values in the upper bound input image UB and the result of the darkening image limiting operation is the output of the first constrained smoothing filter. Alternatively, the darkening image limiting operation may be omitted and the result of the blur operation may be the output of the first constrained smoothing filter. The dilation radius r1 may be 4 pixels and the blur radius r1' may be equal to r1. Alternatively, the dilation radius r1 may be 1/300^{th} of the width of the lower bound input image LB and the blur radius r1' may be equal to r1. The blur operation may be a Gaussian blur operation which may have a standard deviation of 1/3 * r1' or the blur operation may be a mean filtering operation. In alternative configurations, the first constrained smoothing filter 14 may comprise a spline based or membrane based envelope filter or a glow effect filter.

Illustration 20 shows yet another alternative configuration of the first constrained smoothing filter 14, where an erosion operation with a radius r1b, a second blur operation with a radius r1b', a scaling operation which scales the pixel values by a scaling factor K and a lighten image limiting operation are added. The erosion operation may be a greyscale erosion and the upper bound input signal UB is supplied as input to the erosion operation, the output of the erosion operation is supplied as input to the second blur operation, the output of the second blur operation is supplied to the scaling operation and the output of the scaling operation and the output of the darkening image limiting operation are supplied as inputs the lighten image limiting operation and the output of the lighten image limiting operation is the output of the constrained smoothing filter 14. The erosion radius r1b may be 12 pixels and the second blur radius r1b' may be equal to r1b. Alternatively, r1b may be 1/100th of the width of the lower bound input image LB and the second blur radius r1b' may be equal to r1b. The scaling factor K may be 0.5. The advantage of this configuration is that it may provide an approximately evenly balanced distribution of emitted light energy between projectors, which has several advantages: for example lower peak temperatures in projector optics, better support for camera based automatic alignment systems and increased reduction of speckle pattern artefacts in cases where projector 1 and projector 2 are laser illuminated projectors.

The output of the first constrained smoothing filter 14 is supplied to a lower bound input of a second constrained smoothing filter 15 and the output of the image inversion circuit 16 is supplied to an upper bound input of the second constrained smoothing filter 15. The second constrained smoothing filter 15 may perform an operation similar to that of the first constrained smoothing filter 14 with a dilation radius r2 and a blur radius r2'. The dilation radius r2 may be 2 pixels and the blur radius r2' may be equal to r2. Alternatively the dilation radius r2 may be 1/600^{th} of the width of the lower bound input image of the second constrained smoothing filter 15 and the blur radius r2' may be equal to r2. In an alternative configuration the second constrained smoothing filter 15 may be substituted by a blur filter. The dilation radius r2 of the second constrained smoothing filter 15 may be adjustable and the blur radius r2' may be set to follow r2 when adjusted. It is noted that when r2=0 and r2'=0, the output of the second constrained smoothening filter 15 is equal to the lower bound input, i.e. equal to the output of the first constrained smoothing filter 14.

The output of the gamma decoding circuit 6 and the output of the second constrained smoothing filter 15 are supplied to an image subtraction circuit 13 which calculates an image by subtracting the output of the second constrained smoothing filter 15 from the output of the gamma decoding circuit 6. The result of the subtraction is supplied to a first input of the first image division circuit 101. The output image T from the image buffer 9 is supplied to a second input of the first image division circuit 101. The first image division circuit 101 divides the first input by the second input and the result of the division is supplied to the input of the second gamma encoding circuit 8. Hence, the first image division circuit 101 scales pixel values in the output image of the second image subtraction circuit 13, which will be in the range from 0 to the corresponding pixel values of T, by dividing with the pixel values in T, so the resulting output pixel values are scaled to be in the range 0 to 1.

The output image of the second constrained smoothing filter 15 is further supplied to a first input of the second image division circuit 102 and the output of the image inversion circuit 16 is supplied to a second input of the second image division circuit 102. The second image division circuit 102 divides the first input by the second input and the result of the division is supplied to the input of the first gamma encoding circuit 7. Hence, the second image division circuit 102 scales pixel values in the output image of the second constrained smoothing filter 15, which will be in the range from 0 to the inverse of the corresponding pixel values of T, by dividing with the inverse of the pixel values in T, so the resulting output pixel values are scaled to be in the range 0 to 1.

The output of the first gamma encoding circuit 7 is supplied to the input of the warping circuit 5 and the output of the warping circuit 5 is supplied to the input of the second projector 2. The output of the second gamma encoding circuit 8 is supplied to the input of the first projector 1.

In an alternative, simplified configuration of the first embodiment, the darkening image limiter 12 may be omitted and a uniform, maximum intensity image may be supplied to the upper bound input of the first constrained smoothing filter 14.

Illustration 4 shows graphs of values in an example section of a row of pixeis at different stages of the processing, the first graph in illustration 4 shows the output of the gamma decoding circuit 6, the second graph shows the output of the darkening limiter 12 and the third graph shows the output of the first image subtraction circuit 11.

Illustration 5 shows three graphs of values in the example section of a row of pixels at different stages of an operation of the constrained smoothing filter 14 with a dilation radius r1 of 3 pixels and a blur radius r1' essentially equal to r1. In the first graph in illustration 5 the result of the dilation operation is indicated as a black line with the lower bound input indicated in dark gray and the upper bound input indicated in light gray. The second graph shows in a similar manner the result of the blur operation and the third graph shows the result of the darkening operation.

Illustration 6 shows 3 example graphs of the values in a row of pixels, the first graph in illustration 6 shows the output of the second constrained smoothing filter 15 when r1=3 pixels and r2=0 and r1' is essentially equal to r1 and r2' is essentially equal to r2. The second graph shows the output of the image subtraction circuit 13 and the third graph shows summed values of the output of the second constrained smoothing filter 15 and the image subtraction circuit 13, which summed values, as noted above, translate directly to the resulting illumination intensity in the corresponding row of pixels on the projection surface 3 when alignment of the projected images is essentially perfect, because the operations are performed in a gamma of unity. When r2=0 as in this example, summation of the input images to the gamma encoding circuits is equal to the output of the gamma decoding circuit 6, which is the gamma decoded source image, hence, with perfect alignment of the projected images, the resulting image on the projection surface 3 corresponds essentially perfectly to the output of the image generator 4, a condition that can be referred to as a "perfect reconstruction". In an alternative configuration of this embodiment working in the "perfect reconstruction" condition only, the second constrained smoothing filter 15 may be omitted.

As the first graph in illustration 6 shows, the amount of high spatial frequencies in the output of the second constrained smoothing filter 15 is significantly less than in the output image of the gamma decoding circuit 6, resulting in a generally smoother, blurred image being projected by the second projector 2 than in a traditional double stacking configuration.

A first advantage of the invention is that the smoother image of the second projector 2 reduces the visible artefacts introduced by a smaller misalignment of the projected images. In many cases, a misalignment of a full pixel or more is not noticeable, which in a traditional double stacking configuration would have introduced highly visible artefacts.

However, as can be seen on the first graph in illustration 6, the output of the second constrained smoothing filter 15 is not completely eliminated high frequency components. At high contrast edges in the source image where the contrast is close to or above the contrast reproduction capability of the first projector 1, the upper bound and lower bound inputs to the first constrained smoothing filter 14 get so close, so it may not always be possible to create a smooth "curve" (or rather: surface) between them, and these areas of the projected image will be the most sensitive to misalignment. Setting r2 to a value higher than 0 will enforce a smoothing also in these areas, reducing spatial frequency components further and increase the misalignment tolerance. The cost of this increased misalignment tolerance is losing the ability of achieving "perfect reconstruction" and introducing small artefacts even at perfect alignment of the projected images, in the form of faint haloes around edges in the source image with a contrast higher than the first projector 1 is capable of reproducing. Hence, adjusting r2 defines a compromise between "perfect reconstruction" and "high misalignment tolerance".

Illustration 7 is equivalent to illustration 6, except that the dilation radius r2 is 2 pixels here and the blur radius r2' is essentially equal to r2. The dilation radius r1 is still 3 pixels and the blur radius r1' is still essentially equal to r1. The faint halo artefact is visible in the summed graph at the bottom just to the left of the highest peak. Fortunately, these artefacts may be unrecognizable for the Human Visual System in a projected image due to lateral inhibition in the neural response system on the retina (lateral masking), when r2 is below a limit determined by the overall projection system on-screen contrast, hence theoretical "perfect reconstruction" is not necessarily needed. Determining a good value for r2 for a given type of projection system may be performed by having a critical group of observers located in the front rows look at a test pattern containing maximum contrast edges and switch between random values of r2 and ask the group members to rate the images in terms of edge sharpness and then selecting the value of r2 where nobody notices the reduction of edge sharpness. It is noted that the reason for selecting the second constrained smoothing filter 15 also for the second filtering pass, as opposed to for example selecting a standard lowpass filter, is that this configuration preserves illumination intensity in small areas of highlights like reflections in water or leafs, which may be important visual clues that are not subject to suppression by lateral inhibition.

Illustration 8 shows printed images of an output of the second constrained smoothing filter 15 together with the output of the image subtraction circuit 13 and a simulation of the resulting projected overlaid image calculated by adding the output of the second constrained smoothing filter 15 and the output of the image subtraction circuit 13. (The images have here been applied a gamma so they are watchable on print).

Illustration 9 shows similar simulations of an enlarged section of an image projected with a 2 pixel misalignment. The upper image is a simulation of a projection with traditional double stacking and the lower image is a simulation of a projection with the first embodiment of the invention.

A second advantage of the invention is that the output image of the second constrained smoothing filter 15 will generally not be watchable and not hold enough detail information to be manipulated into a watchable image without additional information being supplied, meaning, that in copy-protected projection systems, where signal paths and image storages are subject to encryption and physical anti-tampering requirements, the whole signal path from the output of the second constrained smoothing filter 15 including the warping circuit 5 and the second projector 2 may not need to be encrypted or physically secured. Illustration 10 shows an example of including the first embodiment in a digital cinema server. An anti-tampering protective housing 18 encompasses the indicated components. The output of the second gamma encoding circuit 8 is supplied to an encryption circuit 17 and the first projector 1 is a digital cinema projector capable of decrypting the input image signal. Illustration 11 shows an example of including the first embodiment in a digital cinema projector. The image generator 4 may be a digital cinema server outputting an encrypted image signal, a decryption circuit 19 decrypts the signal and the anti-tampering housing 18 encompasses the indicated components. Illustration 12 shows an example of the first embodiment included in a stand-alone unit with an image decryption circuit 18 decrypting the encrypted output of the image generator 4 which may be a digital cinema server and an image encryption circuit 17 encrypting the image signal and outputting the encrypted signal to a digital cinema server capable of decrypting the image signal and the anti-tampering housing encompassing the indicated components. In the configurations of illustrations 9, 10 and 11, the first gamma encoding circuit 7, the warping circuit 5 and the second projector 2 are outside the anti-tampering housing and process unencrypted signals, making the practical implementation relatively uncomplicated.

In an alternative configuration of the first embodiment, a resampling circuit may be included, which resamples the output image from the first gamma encoding circuit 7 to a lower spatial resolution and supplies the resulting resampled image to the warping circuit 5 and where the warping circuit and the second projector 2 have lower spatial resolution than the first projector 1. Since the output of the first gamma encoding circuit 7 contains little high frequency components, this may have only little or no effect on the resulting image quality.

Hence, a third advantage of the invention is that upgrade costs may be reduced and investments in existing equipment protected, for example in a theatre with a single 2K projector wishing to upgrade to 4K and increased brightness. In general, the relaxed requirements to the second projector 2 opens up possibilities for asymmetric configurations where the second projector 2 may be a completely different projection system than the first projector 1, having limitations that would not make it useful for traditional double stacking but are less significant in a configuration of the first embodiment, like lower resolution, slightly visible blending edges or brightness differences of a tiled system, not supporting encryption etc., but having other relevant advantages, such as good black level, being already installed or being optimised to serve specialized applications when not used as part of the first embodiment, such as conference presentations, planetarium star field projection etc.

In yet an alternative configuration of the first embodiment, an image erosion circuit is inserted between the output of the first constrained smoothing filter 14 and the lower bound input of the second constrained smoothing filter 15, where said image erosion circuit performs a greyscale erosion operation on the image signal received from the first constrained smoothing circuit 14. The radius R3 of the greyscale erosion operation may be 0.5 pixel or 1 pixel. This configuration presents the advantage that errors in actual on-screen pixel intensities due to misalignment may be shifted into brighter regions, where the same linear intensities will be less noticeable to the human eye due to the non-linear nature of the human visual system.

In yet an alternative configuration of the first embodiment, a colour correction circuit is inserted between the output of the first image subtraction circuit 11 and the lower bound input of the first constrained smoothing filter 14. Said colour correction circuit is further connected to the output of the gamma decoding circuit 6 and it adds to the pixel values in the image received from the first image subtraction circuit 11 in a way so that the pixels in the output to the first constrained smoothing filter 14 have essentially the same hue as the corresponding pixels in the image signal received from the gamma decoding circuit 6. This operation may be performed by, for each pixel calculating a constant K = Max(R11/R6, G11/G6, B11/B6), where (R6,G6,B6) is the pixel colour value of the output of the gamma decoding circuit 6 and (R11,G11,B11) is the pixel colour value of the output of the first image subtraction circuit 11 and where Max(x,y,z) denotes a function returning the highest of the values x, y and z, and by calculating the output pixel colour values R'=K*R6, G'=K*G6 and B'=K*B6, and outputting (R',G',B') to the lower bound input of the first constrained smoothing filter 14. In this configuration, pixel hues in the images projected from both projectors will be the same, which may in some images reduce the visibility of misalignment artefacts further.

In yet an alternative configuration of the first embodiment, the output signal from the first gamma encoding circuit 7 or from the resampling circuit is recorded on a first medium and the output of the second gamma encoding circuit 8 is encrypted and recorded on a second medium, and the first medium and the second medium are played back synchronously with the output of the first recording medium being supplied to the warping circuit 5 which is calibrated for alignment of the images and supplies the warped output to the second projector 2 and the output of the second medium being supplied to projector 1.

A fourth advantage of the invention is that it may reduce banding artefacts introduced by a traditional double stacking configuration, because it may have higher dynamic contrast resolution compared to that of a traditional double stacking system, since more different resulting intensities on said projection surface 3 is possible. In a traditional double stacking configuration where each projector has discrete intensity steps matched to the Just Noticeable Differences of the Human Visual System, the resulting overlaid image on the projection surface 3 may have discrete intensity steps exceeding the Just Noticeable Differences, which may result in visible banding.

A fifth advantage of the invention is that an automatic re-alignment system based on a digital image capturing system taking pictures of resulting superimposed image projected on the projection surface 3 may separate a captured image into components originating from each projector and perform recalibration of the warping circuit without the need for iterations over a sequence of frames in a public presentation or using special iterating training sequences. For example, a high frequency filtering of a captured image may create an image that is related only to the image being projected by the first projector 1 making it possible to do feature matching or tracking, identify a first set of misalignment vectors from the captured image with respect to the input image to the first projector 1 and warp the captured image so it is aligned with the first projector 1, and then subtract a gamma decoded version of the image being input to the first projector 1 from a gamma corrected and gain-corrected version of the captured image, resulting in an image that is related only to the image being projected by the second projector 2, so feature matching or tracking is possible and a second set of misalignment vectors between the captured image and the image being projected by the second projector 2 can be calculated, and from the first and second set of misalignment vectors calculate a third set of misalignment vectors, which is the misalignment vectors between the image being projected by the first projector 1 and the image being projected by the second projector 2 and from the third set of misalignment vectors perform a re-calibration of the warping circuit 5. Alternatively, in an RGB projection system, a single alignment image may be constructed which in one colour plane contains a geometric pattern, for example a grid, which has only pixel values above the values in the threshold image T and where another colour plane contains the same geometric pattern but with pixel values below the values in the threshold image T, thus for each pixel position it is possible to obtain relative misalignment vectors between the projectors and perform a re-calibration of the warping circuit 5.

Additionally, the first embodiment may be switchable to a single projector mode, in which one of the projectors is simply being supplied the source image. This single projector mode may act as fall-back operation in case of a projector failure and may be activated automatically by a detection system capable of detecting a projector failure, where the detection circuit may be an integrated part of the projector or where the detection circuit may be based on a digital image capture system taking pictures of the resulting superimposed image being projected on the projection surface 3, resulting in a degree of redundancy, where, for example in the case that a lamp blows, the system will continue to project correct images albeit with less brightness.

Illustration 18 shows yet an alternative configuration of the first embodiment, supporting an especially advantageous re-alignment procedure, where an image buffer 103 holding an alignment pattern, an image addition circuit 104 and a darkening limiter 105 are added. The output of the image buffer 103 is supplied to one input of the image addition circuit 104 and the output of the constrained smoothing filter 15 is supplied to another input the image addition circuit 104, and the output of the image addition circuit 104 is supplied to one input of the darkening limiter 105 and the output of the gamma correction circuit 6 is supplied to another input of the darkening limiter 105 and the output of the darkening limiter is supplied to one input of the image division circuit 102 and to one input of the image subtraction circuit 13, as shown in the illustration. The output of the image buffer 103 may be switchable between a black picture and the alignment pattern, so the alignment pattern can effectively be switched off, when alignment detection is not requested. The effects of these added circuit elements on the projected images are that the image projected by projector 2 will be added a constrained alignment pattern, which is the output of the image buffer 103 being constrained, so that the result of the addition in each pixel position is still equal to or lower than the intensities of the corresponding pixel values in the source image, and the image projected by projector 1 will be subtracted the constrained alignment image, so when the two images are superimposed on the projection surface 3 with perfect alignment, the alignment pattern will be cancelled out and become invisible, so only the source image is visible. However, when a misalignment is introduced, the alignment pattern becomes visible as pattern sections of lower and higher intensities than the surrounding pixels. This enables easy and precise visual detection of any present misalignment. The position of lower and higher intensities indicates in which direction the misalignment is oriented. For example, if a section of an alignment pattern is visible as lighter pixel values compared to the surroundings, i.e. a lighter pattern imprint, and the same section of the alignment pattern is visible as darker pixel values compared to the surroundings, i.e. a darker pattern imprint, and the dark imprint is located to the right and below the light imprint, this indicates that projector 1 is displaced to the right and towards the lower edge relative to the position in which perfect alignment occurs. In this way, detection of misalignment can be executed during operation of the projection system, and even correction may be performed by adjusting the warping circuit 5. The alignment pattern may be designed, so it is not very noticeable to a general audience, though still useful for a projectionist, for example by comprising small graphic elements with regular spacing.

The alignment pattern may be a grid, a mesh or any regular or irregular pattern of elements which may be dots, cross hairs or other graphic elements and it may contain barcodes, semacodes or other identifiers.

Illustration 19 shows example signals of the configuration of illustration 18, where the first image is the output the darkening limiter 105 with the added alignment pattern visible, the second image is the output of image subtraction circuit 13 with the subtracted alignment pattern visible, the third image is the resulting superimposed image on the projection surface 3 with perfect alignment and the fourth image is an example of a resulting superimposed image on the projection surface 3 when misalignment is present.

In a colour image projection system comprising multiple configurations of the first embodiment each projecting a colour plane of the image, a first colour plane may be projected with an alignment pattern by the configuration shown in illustration 18 and the other colour planes may be projected without alignment patterns. When the colour planes are projected by the same physical projectors, the mechanical misalignment of projectors and projection optics will affect the colour planes essentially identical, so the misalignment information observed from the first colour plane can be used to detect and correct the misalignment of all colour planes. This will further reduce the visibility of the alignment pattern to a general audience, especially if the colour plane with the alignment pattern is the blue colour plane, whereas the projectionist can observe the image through an optical filter having essentially the same colour as the colour plane with alignment image, thereby increasing the visibility of the alignment image to the projectionist.

Alternatively to having a projectionist observing the image manually, a camera may record the image on the projection surface 3 and an image processing system may detect and correct misalignment. The image processing system may perform feature matching or feature tracking, for example scale invariant feature tracking, to perform recognition of the alignment pattern or alignment pattern sections. Further, the camera may have a long exposure time, so that several different projected images, for example subsequent frames of a moving picture, are integrated in the image capturing element over one exposure, thereby blurring ail non-static picture elements, but preserving the static alignment pattern for easier recognition of alignment pattern or alignment pattern sections. For example, the alignment pattern or alignment pattern sections may be separated from the integrated and blurred image by a high pass filtering. A sequence of images to be projected may be pre-processed, to increase the blurring of other elements than the alignment pattern when later integrated in the camera's image capturing element, for example a slow, cyclic motion may be introduced to static scenes of a sequence of a moving picture, or one of the colour planes, for example the blue colour plane, may be blurred in one or more or all of the frames of the moving picture.

In a colour image projection system comprising multiple configurations of the first embodiment each projecting a colour plane of the image, an additional colour correction circuit may be comprised, which adds to the pixel values in the colour channels of the outputs of the first constrained smoothing filters 14 in a way so that the hue of the pixels in the output of the first constrained smoothing filters 14 are essentially identical to the hues of the corresponding pixels in the output of the gamma decoding circuit 6. The additional colour correction circuit may perform an operation, where it for each pixel calculates a fraction value, which is the pixel value of the output of the first constrained smoothing filter 14 divided by the corresponding pixel value of the output of the gamma decoding circuit 6, then the additional colour correction circuit identifies the greatest of the fraction values for each of the colour planes, i.e. for each of the multiple configurations of the first embodiments, and for each of the colour planes, a new pixel value is calculated by multiplying the output of the gamma decoding circuit 6 with the fraction value for the colour plane, and the resulting pixel value is supplied to the input of the second constrained smoothing filter 15. The advantage of this colour projection system is that the hues projected from the first projector 1 and from the second projector 2 will for each pixel be essentially identical, which may further decrease visible artefacts resulting from misalignment.

In a specially advantageous configuration, a 3D system is comprising two image processing circuits according to the first embodiment, a first image processing circuit according to the first embodiment being supplied a left perspective image of a 3D image and a second image processing circuit according to the first embodiment being supplied a left perspective image of said 3D image and three projectors, two stationary polarization filters, a temporal varying polarization unit, such as the RealD ZScreen or the RealD XL polarizing beam splitter arrangement with ZScreens, a non-depolarizing projection screen and eyewear with polarizers. A first projector is supplied the output of the second gamma encoding circuit 8 of said first image processing system and has a first polarization filter inserted in the optical path between the light source of said first projector and said projection screen, a second projector is supplied the output of the second gamma encoding circuit 8 of said second image processing system and has a second polarization filter inserted in the optical path between the light source of said second projector and said projection screen, said first polarization filter and said second polarization filter having essentially orthogonal polarization directions or opposite circular polarization direction, and where a third projector is projecting alternately the output of the first gamma encoding circuit or the resampling circuit of said first image processing system and the output of the first gamma encoding circuit or the resampling circuit of said second image processing system. In other words, two separate projection systems, one for a left eye image and one for a right eye image, use each one projector for the high frequency image and share a time multiplexed projector for the low frequency image.

The advantage of this configuration is that the third projector projects alternately the overlay images of the left and right perspective images that have low amounts of high frequency components, therefore the requirements to the performance of this projector in terms of resolution are relaxed, again allowing to optimize the projector for brightness on the cost of some resolution or image sharpness, for example utilizing a polarizing beam splitter with image combiner, such as for example the RealD XL adapter, which essentially doubles the light output of the projector, but at the cost of limiting the maximum obtainable resolution in practical implementations. This way, the same amount of light reaching the screen as with four projectors can be achieved using just three projectors. For example, a 3D projection system comprising three projectors with a 7KW Xenon lamp each could result in the same brightness as that of a system comprising four projectors with 7KW lamps each, which could be adequate for illuminating 3D giant screens. Such a system could rival exisiting filmbased 3D projection systems for giant screens in both image resolution, brightness, image stability, contrast, dynamic range and frame rate.

Illustration 13 shows an immersive, stereoscopic projection configuration with a total of four overlaid projectors, a first left projector 121, a second left projector 122, a first right projector 123 and a second right projector 124, where the first left projector 121 and the second left projector 122 are parts of a configuration according to the first embodiment and are projecting a left view of a stereoscopic image and where the first right projector 123 and the second right projector 124 are parts of a configuration according to the first embodiment and are projecting a right view in an immersive giant screen theatre where the projection surface 3 may be a domed screen or a big flat screen located close to the audience so a large portion of the field of view of the members of the audience located in the theatre seats 125 is filled with image and where the audience members are wearing stereoscopic eyewear. The projectors may be located off-axis close to the edge of the domed screen and may comprise wide angle or fisheye projection optics. The projection optics may be constructed so that pixel density is higher in an area, a "sweet spot", in front of the audience, as is well known in the art of immersive projection. The projection optics may further comprise anamorphic adaptors, which stretch the image in the vertical direction to fill a larger area of the dome. Additional warping circuits may be comprised, which performs a geometrical correction of the left eye source image and the right eye source image. The warping circuits may operate individually on each of the colour planes of the source images so they can be calibrated to further compensate for chromatic aberration in the projection optics. Alternatively to including image splitting circuits according to the first embodiment in the configuration, a playback system may be included, capable of synchronously reproducing previously recorded outputs from an image splitting circuit according to the first embodiment stored on at least one storage medium and supplying the reproduced outputs to the projectors. The storage medium may comprise at least one hard disk containing a first set of assets comprising a first signal for the first left projector 1, where the first signal is the recorded output of the second gamma encoding circuit 8 when the left source image was supplied to the input of the gamma decoding circuit 6 and a second signal for the first right projector 1, where the second signal is the recorded output of the second gamma encoding circuit 8 when the right source image was supplied to the input of the gamma decoding circuit 6, and further containing a second set of assets comprising a third signal for the second left projector, where the third signal is the recorded output of the first gamma encoding circuit 7 when the left source image was supplied to the input of the gamma decoding circuit 6, and a fourth signal for the second right projector, where the fourth signal is the recorded output of the first gamma encoding circuit 7 when the right source image was supplied to the input of the gamma decoding circuit 6. The first set of assets may be stored on the hard disk in the format of a stereoscopic Digital Cinema Package and the second set of assets may be stored on the hard disk in the format of a stereoscopic Digital Cinema Package. The first set of assets may be stored in an encrypted form and the playback system may be able to supply an encrypted signal to the input of the first left projector and an encrypted signal to the input of the first right projector. Further, a first warping circuit may be comprised located in the signal path from the playback system to the second left projector and a second warping circuit may be comprised located in the signal path from the playback system and the second right projector where the first warping circuit and the second warping circuit are calibrated for alignment of the images.

The projectors in the configuration of illustration 12 may use spectral separation for separating the left and right eye views, where members of the audience wear eyewear with dichroic spectral separation filters and where the projectors comprise dichroic spectral separation filters. The separation filters of the first left projector 121 and the second left projector 122 may be essentially identical and the left eye separation filter in the eyewear may be matched to the separation filters of the first left projector 121 and the second left projector 122 and the separation filters of the first right projector 123 and the second right projector 124 may be essentially identical and the right eye separation filter in the eyewear may be matched to the separation filters of the first right projector 123 and the second right projector 124. Spectral separation stereoscopic projection has the advantage of not requiring a special projection surface which is attractive tin many immersive cinema applications, and it has very good image quality and stereoscopic reproduction in a central part of the field of vision, but it has the disadvantage of introducing artefacts outside of the central part of the field of vision, because the filters in the eyewear differ from their nominal performance for incident light with angles not normal (perpendicular) to the filters, a phenomenon which is inherent in the nature of dichroic filters. For these reasons, an improved system for spectral separation stereoscopic projection shall be proposed below.

Illustration 14 shows an example of prior art. A lamp 20 in a first projector emits light into an integrating rod 21 which creates a uniform illumination at the output end. A first projector filter 23, being a dichroic spectral separation filter resting on a glass substrate 22, is located adjacent to the output of the integrating rod 21, essentially in a focal plane of the illumination system 24, so an image of the first projector filter 23 is essentially focused on the spatial light modulator chips 25 of the projector. A second projector (not shown) is configured equivalently but with a second projector filter (not shown), which is mutually exclusive to the first projector filter 23. The first projector filter 23 and the second projector filter have mutually exclusive pass bands and in between there are spectral ranges called guard bands where both the first projector filter 23 and the second projector filter have little transmittance. The left eye separation filter in the eyewear may be a dichroic filter having a set of pass bands encompassing the pass bands in the first projector filter 23 and the right eye separation filter in the eyewear may be a dichroic filter having a set of pass bands encompassing the pass bands in the second projector filter. The separation filters in the eyewear may be slightly curved to partly compensate for the non-normal (non-perpendicular) angle of incident light from pixels in the peripheral areas of the image as observed by a member of the audience positioned with her head directed essentially straight forward with her nose towards the screen, because light with a non-orthogonal angle of incidence travels a longer distance between the dichroic layers of the separation filters, hence is subject to a filtering where the pass bands have been spectrally shifted compared to the filtering of light from pixels in the middle area of the image with essentially normal (perpendicular) angle of incidence, which would otherwise cause the match with the projector filters to be reduced beyond the tolerances provided by the guard bands in the projector filters, giving rise to colour artefacts and artefacts of crosstalk between left and right projection systems ("ghosting") in the peripheral parts of the image. It is normally not practical to use separation filters that are curved enough to completely compensate for the angles of incident light from different parts of the image for aesthetic reasons regarding the eyewear design and because the distance between eyes varies significantly in a population of different ages. The experience of the remaining artefacts in the peripheral parts of the image may be described as having a sheet of slightly coloured, semi-transparent, semi-reflective material with two fuzzy holes in front of your eyes attached to your head, the holes not completely covering the image, resulting in a sense of "tunnel vision". Therefore, further means to reduce the artefacts in the peripheral parts of the image are usually adopted comprising pre-wavelength shifting the projector filters, increasing the width of the guard bands at the cost of reduced brightness and further comprising reducing the size of the eye openings in the eyewear limiting the range of possible angles of incident light, thereby introducing a sharp and psychologically better accepted border of your field of view but obviously at the cost of a restricted field of view. However, for an immersive cinema application, artefacts in the peripheral field of vision will not be completely eliminated. Illustration 15 shows an alternative configuration of the system in illustration 14 where the colour and ghosting artefacts in peripheral parts of the image are compensated by modifying the first projector filter 23 and the second projector filter so the spectrally filtered light at the exit pupils of the projectors becomes wavelength shifted as a function of the angle of emission. The first projector filter 23 and the second projector filter are curved with essentially identical curves, so that light focused on pixels in the peripheral parts of the light modulator chips traverse longer distances between the dichroic layers than light focused on the central parts of the light modulator chips, hence light focused on the peripheral parts of the light modulator chips is wavelength shifted with respect to light focused on the central parts of the light modulator chips and therefore light emitted from pixels in the peripheral parts of the projected image is wavelength shifted with respect to light emitted from pixels in the central parts of the projected image, resulting in a better match of the filtering by the projector filters and the filtering of the eye filters for pixels in the peripheral parts of the image, and in more pixels in the peripheral parts of the image being filtered by the eye filters so that the pass bands of the eye filters encompass the pass bands of the projector filters when observed by a member of the audience in a target observation position. Other members of the audience located at other positions may observe a slightly undercompensated or overcompensated image, but still observe a better image than without compensation. The curve of the first projector filter 23 and the second projector filter may be spherical with radii equal to the width of the aperture of the integrating rod 21. An electronic colour correction is normally applied to the source image to compensate for a slight hue changes as perceived by the Human Visual System in the filters, which cannot be avoided completely for manufacturing reasons. This colour correction is normally spatially uniform over the image area. In the case of using curved filter, this colour correction may instead be spatially non-uniform, so as to achieve projected images that are perceived as uniform in hue to the Human Visual System. Alternatively to comprising curved filters, dichroic filters with varying thickness of the dielectric layers may be comprised.

The experience of watching an image compensated with curved filter is hard to describe, but appears somewhat more pleasing than the "uncompensated experience". It can be described as enlargening the fuzzy holes in the slightly coloured, semi-transparent, semi-reflective sheet so the full image can be seen through them when your face is oriented forwards towards the screen, but the sheet is now detached from your head, though still close, so when you move your head away from the straight looking forward orientation, the edges of the fuzzy holes enter your field of vision, like gazing through a pair of holes in thin drapes.

Illustration 16 shows an alternative configuration, where the first projector filter 23 and the second projector filter may each have a flat area in a central region and only have a curved shape in the peripheral areas of the image where the tolerance by above the mentioned other means of reducing the artefacts in peripheral areas of the image do not suffice. The optimal curve of the projector filters is a function of the distance from the member of the audience to the screen, the curve of the eye filters, the focal length of the relay lenses of the illumination system of the projectors, subjective aesthetic preferences and other factors. A compromise between the "tunnel vision" and "gazing through a pair of holes" may be desirable.

Illustration 17 shows yet an alternative configuration equivalent to the configuration of illustration 14, but where a first curved notch filter 27 resting on a first glass substrate 26 is added located in front of the first projector filter 23 in the left projector and a second curved notch filter resting on a second glass substrate are added correspondingly in the second projector, and where the notch filters have notches essentially matching the guard bands, so the width of the guard bands are being widened as a function of the emission angle of light exiting the exit pupils of the projectors, hence reducing artefacts in the peripheral field of vision and eliminating ghosting artefacts in the central field of vision in the case where the observer turns her head to a large angle that may occur in the configurations according to illustrations 14, 15 and 16, although at the cost of reducing the brightness in the peripheral parts of the projected images. The notch filters may have a flat area in a central part of the image.

The invention is additionally or alternatively characterized by an image processing circuit separating an input image into a first image, being the input image clamped to a threshold, and a second image, being the remainder. The second image is smoothened by moving fractions of pixel values from the first image to the darker areas around edges, reducing the content of high-frequency components in the second image, keeping the sum of the two images identical to the input image. Scaling and gamma corrections are performed at the input and outputs, ensuring that actual luminance superposition applies to the calculations. With perfect alignment, the projected overlaid image will correspond exactly to the input image, whilst the second image will have less high frequency components than the first image.

A first advantage is that the system significantly reduces the perceived artefacts arising from minor misalignment, since the human visual system is less sensitive to errors in low frequency components than in high frequencies. Only where there are edges having a contrast higher than one projector can "drive" alone, the second image will contain high frequency components. However, the human visual system exhibits a lower spatial resolution close to edges of contrasts of 150:1 and above, due to the so called spatial masking effect, so misalignment artefacts at high contrast edges will also be reduced in visibility. A low-pass filtering of the second image, moderate enough to be invisible due to the masking effect of the first image's high frequency components, may help masking misalignment artefacts at high contrast edges further.

A second advantage is that a camera-based automatic alignment system can periodically perform realignment throughout a film projection, based on the images in the film, with no need for special calibration sequence runs. Because the projectors do not project identical images, it is possible to separate the first and the second image from the recorded on-screen image, and from those calculate misalignment information, which in turn may be used for electronic re-alignment by geometric correction (warping).

A third advantage is that a single-projector 2K system can be upgraded to increased brightness and 4K resolution, by adding a 4K projector. Since an invisible moderate low pass filtering of the second image is possible, it results in that it is possible to use a lower resolution projector for the second image, maintaining the appearance of the full high resolution of the first projector (only brighter). A fourth advantage is that the resulting luminance resolution of the system is higher than that of a single projector, which could be of significance to high dynamic range projection systems.

The invention is additionally or alternatively characterized by the points:
1. An image projection system comprising two image projectors, a first projector and a second projector, where said first projector and said second projector project over-laid images onto a projection surface, resulting in a superimposed image, further comprising a first image processing circuit, which separates an input image into two images: a first projector image being input to said first projector and a second projector image being input to said second projector, so that when said first projector is projecting said first projector image and said second projector is projecting said second projector image, the overlaid image formed on the projection surface essentially corresponds to said input image, and where the amount of high spatial frequencies is lower in said second projector image than in said first projector image.
2. An image projection system according to point 1, where colour correction circuits are added to both of said projector's inputs, calibrated so that the resulting projector transfer functions between pixel values and projected colour plane luminances become essentially linear and identical, so that the resulting projected colour plane luminances at a point on the display surface is essentially a function of the sum of the corresponding pixel values of said first projector image and the corresponding pixel values of said second projector image, when said corresponding pixel values of said first projector image is within the range 0 to B1 and said corresponding pixel values of said second projector image is within the range 0 to B2, where B1 is the pixel value corresponding to the maximum colour plane luminance of said first projector and B2 is the pixel value corresponding to the maximum colour plane luminance of said second projector, and where the calculation of said second projector image comprises, for each pixel value of essentially all pixels in the input image, calculating the value that exceeds B1, and where said first projector image is calculated by subtracting said second projector image from said input image, and where the pixel values of said input image is within the range 0 to B, where B=B1+B2 is the pixel value corresponding to maximum colour plane luminance of the resulting superimposed image.
3. An image projection system according to point 2, where said calculation of said second projector image further comprises a smoothing process, adding amounts to pixel values in said second projector image in a way, so that high frequency components in said second projector image are reduced, and where said amounts are limited to be within zero and the corresponding pixel values in said first projector image.
4. An image projection system according to point 3, where said smoothing process comprises adding halos to edges in said second projector image, where the halos extend into the darker side of the edges gradually fading with increasing distance from the edges.
5. An image projection system according to point 3 or 4, where said smoothing process comprises a weighted greyscale dilation applied to each of the colour planes of said second projector image, where said weighted greyscale dilation is defined as a greyscale dilation with a structuring element D and where the input pixels are first multiplied by the elements of a filtering kernel F.
6. An image projection system according to points 1-5, further comprising a low-pass filter with a convolution kernel L or other smoothening filter inserted between said first image processing circuit and said second projector.
7. An image projection system according to points 1-6, where said second projector has a lower spatial resolution than said first projector.
8. An image projection system according to points 5-7, where the greyscale dilation structuring element D is a disc shaped element with a radius of 0.2 % of the image width, the filtering kernel F is a distance function with a radius of 0.2 % of the image width and the convolution kernel L is a Gaussian kernel with a radius of 0.1 % of the image width.
9. An image projection system according to points 1-8, further comprising an automatic alignment system comprising at least one camera capable of recording images of said resulting projected image on said projection surface and a second image processing circuit, capable of isolating a first set of features originating from said first projector image in an image recorded by said camera(s) and isolating a second set of features originating from said second projector image in said image recorded by said camera(s) and capable of spatially correlating said first set of features and said second set of features to features of said input image and from said correlations calculating spatial misalignment information, further comprising a third image processing circuit, capable of geometrically correcting at least one of said first projector image and said second projector image, based on said misalignment information, so said first projected image and said second projected image become geometrically aligned.
10. An image projection system according to point 9, where said second image processing circuit comprises a colour correction circuit, producing from said recorded image a conformed recorded image, calibrated so that the transfer function between pixel values and colour plane luminances of the overlaid image on said display surface is essentially identical to said projector transfer functions, and where said second image processing circuit seeks to identify at least one low-luminance area(s) in which all pixel values of said conformed recorded image are below a threshold T, where T is less than or equal to B1, and performs a first set of feature matching operations with said first projector image in at least one feature matching area(s) within said low-luminance area(s) resulting in a first set of offset vectors, and where said second image processing circuit can perform a geometrical correction of said conformed recorded image based on said first set of offset vectors, so that the geometrically corrected, conformed recorded image is aligned with said input image and where said second image processing circuit subtracts said first projector image from said geometrically corrected, conformed recorded image and on the resulting image performs a second set of feature matching operations in at least one area(s) with said second projector image resulting in a second set of offset vectors, and where said third image processing circuit is capable of geometrically correcting at least one of said second projector image and said second projector image based on said first set and said second set of offset vectors, so said first projected image and said second projected image become essentially geometrically aligned, and where said feature matching operations may be template matching operations, scale invariant feature tracking operations or any other feature tracking operations known in the art.
11. An image projection system according to points 9 and 10, where said automatic alignment system perform repeated cycles during presentation of a moving picture, a live transmission, a still image or other content, to reduce geometric misalignment arising during projection.
12. An image projection system according to points 1-11, where more than two projectors are projecting overlaid images, said first image processing circuit outputting more than two images, each having different amounts of spatial frequencies and where said second image processing circuit is capable of isolating features in said recorded image originating from each of said projectors.
13. An image projection system according to points 1-12, further comprising any modifications and configurations included in the technical description or evident to a person skilled in the art.

The invention is additionally or alternatively characterized by the additional points:
1. An image projection system comprising an essentially hemispheric, dome shaped projection surface and at least one image projector located near the edge of said domed shaped projection surface, where said image projector projects an image onto the inside of said dome shaped projection surface and where the projected image covers at least 70% of said dome shaped projection surface, comprising a wide angle projection objective, a fish-eye projection objective, a wide-angle conversion lens, a wide-angle conversion mirror, an inverse afocal optical system or a retrofocus optical system or a combination of any of these, further comprising a first image processing circuit which performs a geometrical correction of an input image and sends a corrected output image to the input of said projector.
2. An image projection system according to the additional point 1 further comprising an anamorphic adaptor comprising at least one prism located in the light path between the image forming element and the screen, where said anamorphic adaptor is stretching said image in one direction.
3. An image projection system according to additional points 1 or 2, where said first image processing circuit is calibrated, so that said projected image essentially has the same geometry as a projected image from a fish-eye projector located essentially at the center of said hemispheric, dome shaped projection surface, when said input image is being input to said fish-eye projector.
4. An image projection system according to additional points 1-3, where said first image processing circuit is able to perform separate geometrical corrections of each of the colorplanes of said input image, and where said first image processing circuit is calibrated so that said geometrical corrections compensates for chromatic aberrations in the optical elements of said image projection system.
5. An image projection system according to additional points 1-4, where at least one area located in said dome shaped projection surface has a higher spatial resolution than the average spatial resolution of said projected image, and where said input image has a higher spatial resolution than said corrected output image, and where said image processing circuit essentially preserves as much spatial resolution from said input image to said output image as possible.
6. An image projection system according to additional points 1-5, further comprising a second image processing circuit able to calculate from said corrected output image a reflection-error image, where said reflection-error image is an estimate of the total reflected light that will be received at each position on the display surface from other parts of the display surface by scattering, if said input image were to be projected onto the display surface by said projector, where said reflection-error image may be calculated based on a set of screen measurements and where said reflection-error image may be calculated by radiosity calculations, and where said image processing circuit essentially subtracts said reflection error image from said input image (negative values being set to zero) resulting in a compensated image, which may be sent to the input of said projector.
7. An image projection system according to additional point 6, where local contrast enhancement is applied to areas of said compensated image, where full cancellation of reflected light is not achieved by the subtraction of said reflection-error image.
8. An image projection system according to the additional point 7, where a remainder-error image is calculated as the difference between said reflection-error image and the result of a subtraction of said compensated image from said corrected output image, and where a contrast enhanced compensated image is calculated from said compensated image by local contrast enhancement and where said remainder-error image is low-pass filtered and then used as a key in a keying operation between said compensated image and said contrast enhanced compensated image, and where the resulting image of the keying operation is sent to the input of said projector.
9. An image projection system according to additional points 7 or 8, where said local contrast enhancement is an unsharp mask operation or a local tone mapping operation.
10. An image projection system according to additional points 1-9, further comprising any modifications and configurations included in the technical description or evident to a person skilled in the art.

Points characterizing the invention
1. A method for producing a first output image and a second output image for being projected by a first projector and a second projector, respectively, said method comprising:
   (a) providing a source image comprising a plurality of pixels, each pixel having an source value,
   (b) providing a threshold value for each pixel of said plurality of pixels, and in a first alternative
   (d) generating a temporary image comprising a temporary value for each pixel of said plurality of pixels, said temporary value being generated in a process equivalent to:
      (i.i) determining a first maximum value as the maximum of said source value and its corresponding threshold value for each pixel,
      (i.ii) determining an intermediate value by subtracting the corresponding threshold value from said first maximum value for each pixel,
      (i.iii) generating said temporary value from said intermediate value for each pixel;
   or in a second alternative
   (c) providing an inverted threshold value for each pixel of said plurality of pixels, each inverted threshold value being an inversion of its corresponding threshold value,
   (d) generating a temporary image comprising a temporary value for each pixel of said plurality of pixels, said temporary value being generated in a process equivalent to:
      (i.i) determining an intermediate value as the minimum of said source value and its corresponding inverted threshold value for each pixel,
      (i.ii) generating said temporary value from said intermediate value for each pixel;
   or in a third alternative
   (c) providing an inverted threshold value for each pixel of said plurality of pixels, each inverted threshold value being an inversion of its corresponding threshold value,
   (d) generating a temporary image comprising a temporary value for each pixel of said plurality of pixels, said temporary value being generated in a process equivalent to:
      (i.i) determining a first maximum value as the maximum of said source value and its corresponding threshold value for each pixel,
      (i.ii) determining a first difference value by subtracting the corresponding threshold value from said first maximum value for each pixel,
      (i.iii) determining a first minimum value as the minimum of said source value and its corresponding inverted threshold value for each pixel,
      (i.iv) determining an intermediate value as the minimum of said first difference value and said first minimum value for each pixel,
      (i.v) generating said temporary value from said intermediate value for each pixel;
   or in a fourth alternative
   (c) providing an inverted threshold value for each pixel of said plurality of pixels, each inverted threshold value being an inversion of its corresponding threshold value,
   (d) generating a temporary image comprising a temporary value for each pixel of said plurality of pixels, said temporary value being generated in a process equivalent to:
      (i.i) determining a first maximum value as the maximum of said source value and its corresponding threshold value for each pixel,
      (i.ii) determining a first difference value by subtracting the corresponding threshold value from said first maximum value for each pixel,
      (i.iii) determining a first minimum value as the minimum of said source value and its corresponding inverted threshold value for each pixel,
      (i.iv) determining an intermediate value from a first range of values comprising values between said first difference value and said first minimum value for each pixel,
      (i.v) generating said temporary value from said intermediate value for each pixel;
   and in all alternatives
   (e) generating said first output image comprising a first output value for each pixel of said plurality of pixels, said first output value being generated from said temporary value and said source value for each pixel, and
   (f) generating said second output image comprising a second output value for each pixel of said plurality of pixels, said second output value being generated from said temporary value.
2. The method according to point 1, characterized by further comprising:
   in said first alternative
      (c) providing an inverted threshold value for each pixel of said plurality of pixels, each inverted threshold value being an inversion of its corresponding threshold value.
3. The method according to any of the points 1 to 2, characterized by said process of generating said temporary value further comprising:
   in all alternatives
      (i.vi) smoothing said intermediate value for each pixel, and in said third and fourth alternative
      (i.vi) smoothing said first difference value and/or said first minimum value.
4. The method according to point 3, characterized by said smoothing comprising a spline filter, a membrane filter, and/or an envelope filter.
5. The method according to any of the points 3 to 4, characterized by said smoothing being adapted for limiting said intermediate value to a value from said first range of values subsequent to said smoothing.
6. The method according to any of the points 3 to 5 characterized by said smoothing comprising a first dilation operation comprising a first dilation radius.
7. The method according point 6, characterized by said first dilation radius being 4 pixels, or approximately 0.3% of the width of said temporary image.
8. The method according to any of the point 3 to 7, characterized by said smoothing comprising a first blur operation.
9. The method according to point 8 and any of the points 6 to 7, characterized by said first dilation operation being performed prior to said first blur operation.
10. The method according to any of the points 8 to 9 and any of the points 6 to 7, characterized by said first blur operation comprising a first blur radius approximately equal to or smaller than said first dilation radius.
11. The method according to any of the points 8 to 10 characterized by said first blur operation comprising a first Gaussian blur operation.
12. The method according to point 11, characterized by said first Gaussian blur operation having a standard deviation approximately equal to a third of said first blur radius, or approximately equal to or smaller than 4/3 pixels, or approximately 0.1 % of the width of said temporary image.
13. The method according to any of the points 8 to 12, characterized by said first blur operation comprising a first mean filtering operation.
14. The method according to any of the points 1 to 13, characterized by said process generating said temporary value further comprising:
   (i.vii) determining a second minimum value as the minimum of said intermediate value and said inverted threshold value for each pixel,
   (i.viii) generating a second smoothed value by smoothing said second minimum value for each pixel, and
   (i.ix) generating said temporary value from said second smoothed value for each pixel.
15. The method according to point 14, characterized by said smoothing of said second minimum value comprising a spline filter, a membrane filter, and/or an envelope filter.
16. The method according to any of the points 14 to 15, characterized by said smoothing of said second minimum value comprising a second dilation operation comprising a second dilation radius.
17. The method according point 16, characterized by said second dilation radius being 2 pixels, or approximately 0.17% of the width of said temporary image.
18. The method according to any of the point 14 to 17, characterized by said second dilation radius being variable.
19. The method according to point 18, characterized by said second dilation radius being variable in a second range of values including zero.
20. The method according to any of the point 14 to 19, characterized by said smoothing of said second minimum value comprising a second blur operation.
21. The method according to point 20 and any of the points 16 to 19, characterized by said second dilation operation being performed prior to said second blur operation.
22. The method according to any of the points 20 to 21 and any of the points 16 to 19, characterized by said second blur operation comprising a second blur radius approximately equal to or smaller than said second dilation radius.
23. The method according to point 22, characterized by said second blur radius being variable.
24. The method according to any of the point 23, characterized by said second blur radius being variable in a third range of values including zero.
25. The method according to any of the points 22 to 24, characterized by said second blur radius and said second dilation radius being coupled such that one changes as a function of the other.
26. The method according to any of the points 20 to 25, characterized by said second blur operation comprising a second Gaussian blur operation.
27. The method according to point 26, characterized by said second Gaussian blur operation having a standard deviation approximately equal to a third of said first blur radius, or approximately equal to or smaller than 2/3 pixels, or approximately 0.055% of the width of said temporary image.
28. The method according to any of the points 20 to 27, characterized by said second blur operation comprising a second mean filtering operation.
29. The method according to any of the points 1 to 28, characterized by providing said source image comprising:
   (ii.i) providing a gamma encoded source image encoded by a first gamma encoding,
   (ii.ii) generating a gamma decoded source image by performing a first gamma decoding of said gamma encoded source image, said gamma decoding corresponding to said first gamma encoding, and
   (ii.iii) outputting said gamma decoded source image as said source image.
30. The method according to any of the points 1 to 29, characterized by further comprising:
   (g) performing a second gamma encoding of said first output image, said second gamma encoding corresponding to a second gamma decoding of said first projector.
31. The method according to point any of the points 1 to 30, characterized by further comprising:
   (h) performing a third gamma encoding of said second output image, said third gamma encoding corresponding to a third gamma decoding of said second projector.
32. The method according to any of the points 1 to 31, characterized by said process of generating said temporary value further comprising:
   in all alternatives
      (i.x) performing a first colour correction of said intermediate value for each pixel, and
   in the third and fourth alternatives
      (i.x) performing a first colour correction of said intermediate and/or said first difference value for each pixel.
33. The method according to point 32, characterized by in all alternatives said first colour correction being adapted for correcting said intermediate value to obtain approximately the same first hue as the corresponding source value and in the third and fourth alternative said first colour correction being adapted for correcting said first difference value and/or said intermediate value to obtain approximately the same first hue as the corresponding source value.
34. The method according to any of the points 32 to 33, characterized by said first colour correction comprising a process equivalent to:
   (iii.i) calculating a constant K for each pixel, K being equal to the maximum of R11/R6, G11/G6, and B11/B6; R6, G6, and B6 are the pixel colours of said source image; and R11, G11, and B11 are the pixel colour values subsequent to determining said first intermediate value for each pixel,
   (iii.ii) correcting said intermediate value by replacing it with said source value multiplied with said constant K for each pixel.
35. The method according to any of the points 1 to 34, characterized by further comprising:
   (i) lowering the spatial resolution of said second output image and/or performing a blur operation on said second output image.
36. The method according to any of the points 1 to 35, characterized by further comprising:
   (j) encrypting said first output image.
37. The method according to any of the points 1 to 36, characterized by further comprising:
   (k) recording said first output image on a first recording medium.
38. The method according to point 37, characterized by further comprising:
   (l) extracting said first output image from said first recording medium.
39. The method according to any of the points 1 to 38, characterized by further comprising:
   (m) recording said second output image on a second recording medium.
40. The method according to point 39, characterized by further comprising:
   (n) extracting said second output image from said second recording medium.
41. The method according to any of the points 1 to 40, characterized by further comprising:
   (o) performing a geometric correction of said second output image, said geometric correction being adapted for aligning an image projected by said second projector with an image projected by said first projector.
42. The method according to any of the points 1 to 41, characterized by said process of generating said temporary value further comprising:
   (i.xi) performing an erosion operation, preferably a grey scale erosion operation having a radius a half pixel, a full pixel, 0.04% of the width of temporary image, or 0.08% of the width of temporary image, on said intermediate value for each pixel of said plurality of pixels.
43. The method according to any of the points 1 to 42, characterized by, in said fourth alternative, said source value being excluded from said first range of values for each pixel.
44. The method according to any of the points 1 to 43, characterized by, in said fourth alternative, said first range of values further comprises said first difference value and said first minimum value.
45. The method according to any of the points 1 to 44, characterized by said first output value being generated for each pixel in a process equivalent to:
   (iv.i) determining a second difference value by subtracting said temporary value from said source value for each pixel, and
   (iv.ii) generating said first output value from said second difference value.
46. The method according to any of the points 1 to 45, characterized by said first output value being generated for each pixel in a process equivalent to:
   (iv.i) determining a second difference value by subtracting said temporary value from said source value for each pixel,
   (iv.ii) generating a first ratio by dividing said second difference value by said threshold value for each pixel, and
   (iv.iii) generating said first output value from said first ratio for each pixel.
47. The method according to any of the points 1 to 40, characterized by said second output value further being generated from said inverted threshold value.
48. The method according to any of the points 1 to 47, characterized by said second output value being generated for each pixel in a process equivalent to:
   (v.i) generating a second ratio by dividing said temporary value by said inverted threshold value for each pixel, and
   (v.ii) generating said second output value from said second ratio for each pixel.
49. The method according to any of the points 1 to 48, characterized by said threshold value for each pixel of said plurality of pixels representing the fraction of the total illumination intensity which said first projector contributes to at the corresponding position on the projection surface in a projection of a uniform and maximum intensity image from said first projector and said second projector, or in a projection of a uniform and maximum intensity image from each of said first projector and said second projector, or in a projection of a uniform and Maximum intensity image from said first projector, or in a projection of a uniform and maximum intensity image from said second projector.
50. The method according to any of the points 1 to 49, characterized by further comprising
   (p) adjusting said temporary image to include an alignment pattern.
51. The method according to point 50, characterized by said adjusting of said temporary image to include an alignment pattern comprising:
   (q) providing said alignment pattern,
   (r) adjusting said temporary image by adding said alignment pattern to said temporary image,
   (s) adjusting said temporary image by a process equivalent to:
      (vi.i) determining a fourth minimum value as the minimum of said temporary value and its corresponding source value for each pixel, and
      (vi.ii) adjusting said temporary value to said fourth minimum value for each pixel.
52. The method according to any of the points 50 to 51, characterized by said alignment pattern comprising a grid, a mesh, a barcode, and/or a semacode, and alternatively or additionally said alignment pattern comprising a regular pattern of elements, and/or an irregular pattern of elements, and alternatively or additionally said alignment pattern comprising a regular pattern of dots and/or cross hairs, and/or an irregular pattern of elements of dots and/or cross hairs.
53. A method for double stacking a first output image and a second output image on a projection surface by a first projector and a second projector, said method comprising:
   (aa) positioning and orienting said first projector and said second projector for overlaying said first output image and said second output image on said projection surface,
   (ab) producing said first output image and said second output image by the method according to any of the points 1 to 52,
   (ac) supplying said first output image and said second output image to said first projector and said second projector, respectively, and
   (ad) projecting said first output image and said second output image by said first projector and said second projector, respectively.
54. The method according to point 53, characterized by said first projector and said second projector generating a superimposed image on said projection surface, said method further comprising:
   (ae) recording a first captured image of said superimposed image,
   (af) determining a first contribution of said first projector to said first captured image,
   (ag) generating a first feedback image from said first contribution,
   (ah) generating a first set of misalignment vectors from said first feedback image and said first output image by a feature tracking and/or feature matching,
   (ai) generating a first warped image of said first captured image by a first warping comprising said first set of misalignment vectors,
   (aj) generating a second feedback image by subtracting said first output image from said first warped image,
   (ak) generating a second set of misalignment vectors from said second feedback image and said second output image by a feature tracking and/or feature matching,
   (al) generating a third set of misalignment vectors from said first set of misalignment vectors and said second set of misalignment vectors, and
   (am) deriving a first geometric correction of said first output image and/or said second output image from said third set of misalignment vectors.
55. The method according to point 54, characterized by determining said first contribution of said first projector comprises a high pass filtering of said first captured image.
56. A method for deriving a correction of a double stacking of a first output image and a second output image on a projection surface by a first projector and a second projector, said method comprising:
   (ba) positioning and orienting said first projector and said second projector for overlaying said first output image and said second output image on said projection surface,
   (bb) producing a first output for a first source image, said first output comprising said first output image and said second output image produced by the method according to any of the points 50 to 52 for said first source image,
   (bc) supplying said first output image and said second output image of said first output to said first projector and said second projector, respectively, and
   (bd) projecting said first output image and said second output image of said first output by said first projector and said second projector, respectively, on said projection surface,
   (be) recording a first captured image comprising said first output image and said second output image of said first output projected on said projection surface,
   (bf) detecting a contribution of said misalignment pattern of said first output in said first captured image
   (bg) deriving a geometric correction for said second output image from said detected contribution of said misalignment pattern of said first output.
57. The method according to point 56, characterized by further comprising:
   (bh) producing a second output for a second source image for being displayed subsequent to said first source image, said second output comprising said first output image and said second output image produced by the method according to any of the points 50 to 52 for said second source image,
   (bi) supplying said second output image and said second output image of said second output to said first projector and said second projector, respectively, and
   (bj) projecting said second output image and said second output image of said second output by said first projector and said second projector, respectively, on said projection surface,
   (bk) recording a second captured image comprising said first output image and said second output image of said second output projected on said projection surface,
   (bl) detecting a contribution of said misalignment pattern of said second output in said second captured image,
   (bm) deriving a geometric correction for said second output image from said detected contribution of said misalignment pattern of said second output.
58. The method according to 56, characterized by further comprising:
   (bh) producing a second output for a second source image for being displayed subsequent to said first source image, said second output comprising said first output image and said second output image produced by the method according to any of the points 50 to 52 for said second source image,
   (bi) supplying said second output image and said second output image of said second output to said first projector and said second projector, respectively, and
   (bj) projecting said second output image and said second output image of said second output by said first projector and said second projector, respectively, on said projection surface,
   (bk) recording said first captured image comprising said first output image and said second output image of said second output projected on said projection surface,
   (bl) detecting a contribution of said misalignment pattern of said first output in said first captured image further comprising detecting a contribution of said misalignment pattern of said second output in said first captured image,
   (bm) deriving a geometric correction for said second output image from said detected contribution of said misalignment pattern of said first output and said second output.
59. The method according to any of the points 57 to 58, characterized by detecting a contribution of said misalignment pattern of said first output in said first captured image and detecting said contribution of said misalignment pattern of said second output in said second captured image further comprising a time averaging of said first captured image and said second captured image, and/or said detecting of a contribution of said misalignment pattern of said first output and said second output comprising high pass filtering.
60. The method according to any of the points 57 to 59, characterized by the misalignment pattern of said first output and said misalignment pattern of said second output being the same.
61. The method according to any of the points 57 to 59, characterized by the misalignment pattern of said first output and said misalignment pattern of said second output being different.
62. The method according to any of the points 57 to 59, characterized by the misalignment pattern of said second output being generated from said misalignment pattern of said first output.
63. The method according to any of the points 57 to 59, characterized by the misalignment pattern of said second output and said misalignment pattern of said first output being generated by a cyclic function, said cyclic function being periodic as a function of time.
64. A method for producing a first output image and a second output image of a first colour for being projected by a first projector and a second projector, and for producing a first output image and a second output image of a second colour for being projected by said first projector and said second projector, said method comprising:
   (ca) producing said first output image and said second output image of said first colour by the method according to any of the points 1 to 52, and
   (cb) producing said first output image and said second output image of said second colour by the method according to any of the points 1 to 52.
65. A method for producing a first output image and a second output image of a first colour for being projected by a first projector and a second projector for projecting said first colour, and for producing a first output image and a second output image of a second colour for being projected by a first projector and a second projector for projecting said second colour, said method comprising:
   (ca) producing said first output image and said second output image of said first colour by the method according to any of the points 1 to 49, and
   (cb) producing said first output image and said second output image of said second colour by the method according to any of the points 50 to 52.
66. The method according to any of the points 64 and 65, characterized by said producing of said first output image and said second output image of said first colour being performed by the method according to any of the points 50 to 52.
67. The method according to point 66 characterized by said first colour representing shorter light wavelengths than said second colour.
68. The method according to any of the points 66 to 67, characterized by said first colour representing blue and said second colour representing green, yellow, or red.
69. The method according to any of the points 66 to 68, characterized by said producing of said first output image and said second output image of said second colour being performed by the method according to any of the points 50 to 52.
70. The method according to point 69, characterized by said alignment pattern in producing said first output image and said second output image of said first colour and said alignment pattern in producing said first output image and said second output image of said second colour having the same or approximately the same shape.
71. The method according to any of the points 69 to 70, characterized by said alignment pattern in producing said first output image and said second output image of said first colour and said alignment pattern in producing said first output image and said second output image of said second colour having the same or approximately the same dimensions.
72. The method according to point 64 and any of the points 66 to 71, characterized by further being adapted for producing a first output image and a second output image of a third colour for being projected by said first projector and said second projector, said method further comprising:
   (cc) producing said first output image and said second output image of said third colour by the method according to any of the points 1 to 52.
73. The method according to any of the points 64 to 71, characterized by further being adapted for producing a first output image and a second output image of a third colour for being projected by a first projector and a second projector for projecting said third colour, said method further comprising:
   (cc) producing said first output image and said second output image of said third colour by the method according to any of the points 1 to 52.
74. The method according to any of the points 72 to 73, characterized by a first source value of a first pixel of said source image representing said first colour, a second source value of a second pixel of said source image representing said second colour, and a third source value of a third pixel of said source image representing said third colour defining a second hue; a first intermediate value being the intermediate value of said first pixel, a second intermediate value being the intermediate value of said second pixel, and a third intermediate value being the intermediate value of said third pixel defining a third hue, said method further comprising:
   (cd) subjecting said first, second, and third intermediate values to a colour adjustment.
75. The method according to point 74, characterized by said colour adjustment being adapted for adjusting said first, second, and third intermediate values to define said third hue being equal to or approximately equal to said second hue.
76. The method according to any of the points 74 to 75, characterized by said colour adjustment being equivalent to:
   (vii.i) calculating a first fraction as said first intermediate value divided by said first source value,
   (vii.ii) calculating a second fraction as said second intermediate value divided by said second source value,
   (vii.iii) calculating a third fraction as said third intermediate value divided by said third source value,
   (vii.iv) calculating a second maximum value as the maximum of said first, second, and third fractions,
   (vii.v) replacing said first intermediate value by said first source value multiplied by said second maximum value,
   (vii.vi) replacing said second intermediate value by said second source value multiplied by said second maximum value, and
   (vii.vii) replacing said third intermediate value by said third source value multiplied by said second maximum value.
77. A system for producing a first output image and a second output image for being projected by a first projector and a second projector, respectively, said system comprising a computer and/or one or more circuits for performing the method according to any of the points 1 to 52.
78. A system according to point 77, further comprising an image source for providing said source image according any of the points 1 to 52.
79. A system for double stacking a first output image and a second output image, said system comprising a first projector, a second projector, and a computer and/or one or more circuits for performing the method according to any of the points 53 to 55.
80. A system according to point 79, further comprising an image source for providing said source image according any of the points 53 to 55.
81. A system according to any of the points 79 to 80, further comprising a camera for recording said first captured image of said superimposed image according to point 54.
82. A system for deriving a correction of a double stacking of a first output image and a second output image, said system comprising a first projector, a second projector, and a computer and/or one or more circuits for performing the method according to any of the points 56 to 63, said system further comprising a camera for recording said second captured image of said superimposed image.
83. A system for producing a first output image and a second output image of a first colour for being projected by a first projector and a second projector and a first output image and a second output image of a second colour for being projected by said first projector and said second projector, said system comprising a computer and/or one or more circuits for performing the method according to any of the points 64 to 76.
84. A system for producing a first output image and a second output image of a first colour for being projected by a first projector and a second projector for projecting said first colour and a first output image and a second output image of a second colour for being projected by a first projector and a second projector for projecting said second colour, said system comprising a computer and/or one or more circuits for performing the method according to any of the points 65 to 76.
85. A projection system comprising a first projector and a second projector, said first projector comprising:
   a first lamp
   a first integrating rod having an input end and an output end, said first integrating rod being configured for receiving light from said first lamp through said input end and generate a uniform illumination at said output end,
   a first projector filter configured to filter said uniform illumination at said output end of said integrating rod,
   a first spatial light modulator chip,
   a first illumination system for imaging said first projector filter on said light modulator chip,
   a first exit pupil through which light from said a first spatial light modulator chip exits said first projector,
   said second projector comprising:
   a second integrating rod having an input end and an output end, said second integrating rod being configured for receiving light from said second lamp through said input end and generate a uniform illumination at said output end,
   a second projector filter configured to filter said uniform illumination at said output end of said integrating rod,
   a second spatial light modulator chip,
   a second illumination system for imaging said second projector filter on said light modulator chip,
   a second exit pupil through which light from said a second spatial light modulator chip exits said second projector,
   said first projector filter being configured to wavelength shift the light exiting through said first exit pupil, and
   said second projector filter being configured to wavelength shift the light exiting said through said second exit pupil.
86. The projection system according to point 85, characterized by said first projector filter defining a first passband and a first guard band, and said second projector filter defining a second passband not overlapping said first passband and a second guard band overlapping said first guard band.
87. The projection system according to point 85, characterized by said first projector filter defining a first band-stop and said first projector further comprising:
   a first auxiliary filter configured to filter said uniform illumination from said output end of said first integrating and defining a first passband and a first guard band, and said first band-stop matching or approximately matching said first guard band, and
   and said second projector filter defining a second passband not overlapping said first passband and a second guard band overlapping said first guard band.
88. The projection system according to point 85, characterized by said first projector filter defining a first bandstop and said first projector further comprising:
   a first auxiliary filter configured to filter said uniform illumination from said output end of said first integrating and defining a first passband and a first guard band, and said first bandstop matching or approximately matching said first guard band, and
   said second projector filter defining a second bandstop and said second projector further comprising:
   a second auxiliary filter configured to filter said uniform illumination from said output end of said second integrating and defining a second passband not overlapping said first passband and a second guard band overlapping said first guard band, and said second bandstop matching or approximately matching said second guard band.
89. The projection system according to point 88, characterized by said second auxiliary filter being flat and having a second uniform thickness.
90. The projection system according to any of the points 88 to 89, characterized by said first auxiliary filter being flat and having a first uniform thickness.
91. The projection system according to any of the points 85 to 90, characterized by said first projector filter defining a first uniform thickness and/or said second projector filter defining a second uniform thickness.
92. The projection system according to any of the points 85 to 90, characterized by said first projector filter having a first varying thickness and/or said second projector filter having a second varying thickness.
93. The projection system according to any of the points 85 to 92, characterized by said first projector filter defining a first curvature and/or said second projector filter defining a second curvature.
94. The projection system according to any of the points 85 to 93, characterized by said first projector filter defining a first flat area in a first central portion of said first projector filter, and/or said second projector filter defining a second flat area in a second central portion of said second projector filter.
95. The projection system according to any of the points 85 to 94, characterized by said first projector filter defining a first curved shape in a first peripheral portion of said first projector filter, and/or said second projector filter defining a second curved shape in a second peripheral portion of said second projector filter.
96. The projection system according to any of the points 85 to 95, characterized by said first projector filter resting on a first transparent substrate, preferably a first glass substrate, and/or said second projector filter resting on a second transparent substrate, preferably a second glass substrate.
97. The projection system according to any of the points 85 to 96, characterized by said first projector filter being dichroic, and/or said second projector filter being dichroic.
98. The projection system according to any of the points 85 to 97, characterized by said first projector filter being located at said output end of said integrating rod.
99. The projection system according to any of the points 85 to 98, characterized by said first integrating rod defining a first aperture having a first width at said output end and said first projector filter defining a first spherical surface having a first radius equal to or approximately equal to said first width, and/or said second integrating rod defining a second aperture having a second width at said output end and said second projector filter defining a second spherical surface having a second radius equal to or approximately equal to said second width.
100. A system for producing a series of three-dimensional images comprising:
   a computer and/or one or more circuits for producing left output comprising first output images and second output images by repeatedly applying the method according to any of the points 1 to 52, and said computer and/or said one or more circuits further being adapted for producing right output comprising first output images and second output images by repeatedly applying the method according to any of the points 1 to 52, said left output representing left perspective images of said series three-dimensional images and said right output representing corresponding right perspective images of said series three-dimensional images,
   a projection screen,
   a left perspective first projector coupled to said computer and/or one or more circuits and configured for projecting said first output images of said left output on said projection screen,
   a right perspective first projector coupled to said computer and/or one or more circuits and configured for projecting said first output images of said right output on said projection screen, and
   a left/right perspective second projector coupled to said computer and/or one or more circuits and configured for alternatingly projecting said second output images of said left output and said second output images of said right output on said projection screen.
101. A system for producing a series of three-dimensional images comprising:
   a computer and/or one or more circuits for producing left output comprising first output images and second output images by repeatedly applying the method according to any of the points 1 to 52, and said computer and/or said one or more circuits further being adapted for producing right output comprising first output images and second output images by repeatedly applying the method according to any of the points 1 to 52, said left output representing left perspective images of said series three-dimensional images and said right output representing corresponding right perspective images of said series three-dimensional images,
   a projection screen,
   a left perspective first projector coupled to said computer and/or one or more circuits and configured for projecting said first output images of said left output on said projection screen,
   a right perspective first projector coupled to said computer and/or one or more circuits and configured for projecting said first output images of said right output on said projection screen,
   a left perspective second projector coupled to said computer and/or one or more circuits and configured for projecting said second output images of said left output said projection screen, and
   a right perspective second projector coupled to said computer and/or one or more circuits and configured for projecting said second output images of said right output on said projection screen.
102. The system according to any of the points 100 to 101, characterized by said left perspective first projector comprising a left polarization filter for polarizing light projected by said left perspective first projector and said right perspective first projector comprising a right polarization filter for polarizing light projected by said right perspective first projector.
103. The system according to any of the points 100 to 102, characterized by said left polarization filter and said right polarization filter having orthogonal or approximately orthogonal polarization directions.
104. The system according to any of the points 100 to 102, characterized by said left polarization filter and said right polarization filter having opposite circular polarization directions.
105. The system according to any of the points 100 to 104, characterized by said a projection screen being non-depolarizing.
106. The system according to any of the points 100 to 105, characterized by further comprising a temporal varying polarization unit.
107. A method for producing a first output image and a second output image for being projected by a first projector and a second projector, respectively, said method comprising:
   (a) providing a source image comprising a plurality of pixels, each pixel having an source value,
   (b) providing a threshold value for each pixel of said plurality of pixels, and in a first alternative
   (c) providing an inverted threshold value for each pixel of said plurality of pixels, each inverted threshold value being an inversion of its corresponding threshold value,
   (d) generating a temporary image comprising a temporary value for each pixel of said plurality of pixels, said temporary value being generated in a process equivalent to:
      (i.i) determining a first maximum value as the maximum of said source value and its corresponding threshold value for each pixel,
      (i.ii) determining a first difference value by subtracting the corresponding threshold value from said first maximum value for each pixel,
      (i.iii) determining a first minimum value as the minimum of said source value and its corresponding inverted threshold value for each pixel,
      (i.iv) determining a first process value as the minimum of said first difference value and said first minimum value for each pixel, or alternatively determining a first process value from an intermediate range of values comprising values between said first difference value and said first minimum value for each pixel,
      (i.v) generating a second process value from said first minimum value,
      (i.vi) determining an intermediate value as the maximum of said first process value and said second process value for each pixel, or alternatively determining an intermediate value from a first range of values comprising values between said first process value and said second process value for each pixel,
      (i.vii) generating said temporary value from said intermediate value for each pixel;
   (e) generating said first output image comprising a first output value for each pixel of said plurality of pixels, said first output value being generated from said temporary value and said source value for each pixel, and
   (f) generating said second output image comprising a second output value for each pixel of said plurality of pixels, said second output value being generated from said temporary value.
108. The method according to point 107, characterized by said process of generating said temporary value further comprising:
   (i.viii) performing an intermediate erosion operation on said second process value for each pixel of said plurality of pixels.
109. The method according to point 108, characterized by said intermediate erosion operation being a grey scale erosion operation.
110. The method according to any of the points 108 to 109, characterized by said intermediate erosion operation comprising an erosion radius.
111. The method according to point 110, characterized by said intermediate erosion operation having an erosion radius in one or more of the closed ranges 2 pixels to 20 pixels, 4 pixels to 18 pixels, 6 pixels to 16 pixels, 8 pixels to 14 pixels, and 10 pixels to 12 pixels, preferably 12 pixels; and/or in one or more of the closed ranges 2 pixels to 4 pixels, 4 pixels to 6 pixels, 6 pixels to 8 pixels, 8 pixels to 10 pixels, 10 pixels to 12 pixels, 12 pixels to 14 pixels, 14 pixels to 16 pixels, 16 pixels to 18 pixels, and 18 pixels to 20 pixels; and/or in one or more of the closed ranges, 0.04% to 0.06% of the width of temporary image, 0.04% to 0.06% of the width of temporary image, 0.06% to 0.08% of the width of temporary image, 0.08% to 0.10% of the width of temporary image, 0.10% to 0.12% of the width of temporary image, 0.08% to 0.10% of the width of temporary image, 0.12% to 0.14% of the width of temporary image, 0.14% to 0.16% of the width of temporary image, 0.16% to 0.18% of the width of temporary image, and/or 0.18% to 0.20% of the width of temporary image, preferably 0.10% of the width of temporary image.
112. The method according to any of the points 107 to 111, characterized by said process of generating said temporary value further comprising:
   (i.ix) smoothing said second process value.
113. The method according to point 112, characterized by said smoothing of said second process value comprising a spline filter, a membrane filter, and/or an envelope filter.
114. The method according to any of the points 112 to 113 characterized by said smoothing of said second process value being adapted for limiting said second process value to a value from said intermediate range of values subsequent to said smoothing.
115. The method according to any of the point 112 to 113, characterized by said smoothing of said second process value comprising an intermediate blur operation.
116. The method according to point 115 and any of the points 110 to 111, characterized by said intermediate blur operation comprising an intermediate blur radius approximately equal to said erosion radius.
117. The method according to any of the points 115 to 116 characterized by said intermediate blur operation comprising an intermediate Gaussian blur operation and/or an intermediate mean filtering operation.
118. The method according to any of the points 107 to 117, characterized by said process of generating said temporary value further comprising:
   (i.x) scaling said second process value by a scaling factor.
119. The method according to point 118, characterized by said scaling factor being approximately 0.5.
120. The method according to any of the points 108 to 111 and 112 to 117 characterized by said performing of said intermediate erosion operation being performed prior to said smoothing of said second process value.
121. The method according to any of the points 118 to 120 and 112 to 117 characterized by said smoothing of said second process value being performed prior to said scaling said second process value.
122. A method for double stacking a first output image and a second output image on a projection surface by a first projector and a second projector, said method comprising:
   (aa) positioning and orienting said first projector and said second projector for overlaying said first output image and said second output image on said projection surface,
   (ab) producing said first output image and said second output image by the method according to any of the points 107 to 121,
   (ac) supplying said first output image and said second output image to said first projector and said second projector, respectively, and
   (ad) projecting said first output image and said second output image by said first projector and said second projector, respectively.
123. A method for producing a first output image and a second output image of a first colour for being projected by a first projector and a second projector, and for producing a first output image and a second output image of a second colour for being projected by said first projector and said second projector, said method comprising:
   (ca) producing said first output image and said second output image of said first colour by the method according to any of the points 107 to 121, and
   (cb) producing said first output image and said second output image of said second colour by the method according to any of the points 107 to 121.
124. A system for producing a first output image and a second output image for being projected by a first projector and a second projector, respectively, said system comprising a computer and/or one or more circuits for performing the method according to any of the points 107 to 121.
125. A system for double stacking a first output image and a second output image, said system comprising a first projector, a second projector, and a computer and/or one or more circuits for performing the method according to point 122.
126. A system for producing a first output image and a second output image of a first colour for being projected by a first projector and a second projector and a first output image and a second output image of a second colour for being projected by said first projector and said second projector, said system comprising a computer and/or one or more circuits for performing the method according to point 123.
127. The system according to any of the points 124 to 126 characterized by said first projector being a first laser illuminated projector and/or said second projector being a second laser illuminated projector.
128. The method according to any of the points 107 to 123 characterized by further comprising any of the features according to points 1 to 106.
129. The method according to any of the points 124 to 126 characterized by further comprising any of the features according to points 1 to 106.

## Claims

1. A method for producing a first output image and a second output image from a source image for being projected by a first projector (1) and a second projector (2) respectively such that when the two projected images are overlaid forms an image that corresponds to the source image, wherein the source image comprises a plurality of pixels, each pixel having a source value **characterised by** the steps of:
(a) providing a threshold value for each pixel of said plurality of pixels,
(b) providing an inverted threshold value for each pixel of said plurality of pixels, each inverted threshold value being an inversion of its corresponding threshold value,
(c) generating a temporary image comprising a temporary value for each pixel of said plurality of pixels, said temporary value being generated in a process according to:
(i.i) determining a first maximum value as the maximum of said source value and its corresponding threshold value for each pixel,
(i.ii) determining a first difference value by subtracting the corresponding threshold value from said first maximum value for each pixel,
(i.iii) determining a first minimum value as the minimum of said source value and its corresponding inverted threshold value for each pixel,
(i.iv) determining a first process value as the minimum of said first difference value and said first minimum value for each pixel, or alternatively determining a first process value from an intermediate range of values comprising values between said first difference value and said first minimum value for each pixel,
(i.v) generating a second process value from the inverted threshold value,
(i.vi) determining an intermediate value as the maximum of said first process value and said second process value for each pixel, or alternatively determining an intermediate value from a first range of values comprising values between said first process value and said second process value for each pixel,
(i.vii) generating said temporary value from said intermediate value for each pixel;
(d) generating said first output image comprising a first output value for each pixel of said plurality of pixels, said first output value being generated from a second difference value, said second difference value is determined by subtracting said temporary value from said source value for each pixel, and
(e) generating said second output image comprising a second output value for each pixel of said plurality of pixels, said second output value being generated from said temporary value.

2. The method according to claim 1, **characterized by** said process of generating said temporary value further comprising:
(i.viii) performing an intermediate erosion operation on said second process value for each pixel of said plurality of pixels.

3. The method according to claim 2, **characterized by** said intermediate erosion operation being a grey scale erosion operation.

4. The method according to any of the claims 2 to 3, **characterized by** said intermediate erosion operation comprising an erosion radius.

5. The method according to claim 4, **characterized by** said intermediate erosion operation having the erosion radius in one or more of the closed ranges 2 pixels to 20 pixels, 4 pixels to 18 pixels, 6 pixels to 16 pixels, 8 pixels to 14 pixels, and 10 pixels to 12 pixels, preferably 12 pixels; and/or in one or more of the closed ranges 2 pixels to 4 pixels, 4 pixels to 6 pixels, 6 pixels to 8 pixels, 8 pixels to 10 pixels, 10 pixels to 12 pixels, 12 pixels to 14 pixels, 14 pixels to 16 pixels, 16 pixels to 18 pixels, and 18 pixels to 20 pixels; and/or in one or more of the closed ranges, 0.04% to 0.06% of the width of temporary image, 0.04% to 0.06% of the width of temporary image, 0.06% to 0.08% of the width of temporary image, 0.08% to 0.10% of the width of temporary image, 0.10% to 0.12% of the width of temporary image, 0.08% to 0.10% of the width of temporary image, 0.12% to 0.14% of the width of temporary image, 0.14% to 0.16% of the width of temporary image, 0.16% to 0.18% of the width of temporary image, and/or 0.18% to 0.20% of the width of temporary image, preferably 0.10% of the width of temporary image.

6. The method according to any of the claims 1 to 5, **characterized by** said process of generating said temporary value further comprising:
(i.ix) smoothing said second process value.

7. The method according to claim 6, **characterized by** said smoothing of said second process value comprising a spline filter, a membrane filter, and/or an envelope filter.

8. The method according to any of the claims 6 to 7 **characterized by** said smoothing of said second process value being adapted for limiting said second process value to a value from said intermediate range of values subsequent to said smoothing.

9. The method according to any of the claim 6 to 8, **characterized by** said smoothing of said second process value comprising an intermediate blur operation.

10. The method according to claim 9 and any of the claims 4 to 5, **characterized by** said intermediate blur operation comprising an intermediate blur radius approximately equal to said erosion radius.

11. The method according to claim 10 **characterized by** said intermediate blur operation comprising an intermediate Gaussian blur operation and/or an intermediate mean filtering operation.

12. The method according to any of the claims 1 to 11, **characterized by** said process of generating said temporary value further comprising:
(i.x) scaling said second process value by a scaling factor.

13. The method according to claim 12, **characterized by** said scaling factor being approximately 0.5.

14. The method according to any of the claims 2 to 5 and 6 to 11 **characterized by** said performing of said intermediate erosion operation being performed prior to said smoothing of said second process value.

15. The method according to any of the claims 12 to 13 and 6 to 11 **characterized by** said smoothing of said second process value being performed prior to said scaling said second process value.

16. A method according to any of the claims 1 to 15; wherein double stacking the first output image and the second output image on a projection surface by the first projector (1) and the second projector (2) comprises the steps of:
(aa) positioning and orienting said first projector and said second projector for overlaying said first output image and said second output image on said projection surface,
(ab) producing said first output image and said second output image,
(ac) supplying said first output image and said second output image to said first projector and
said second projector, respectively, and
(ad) projecting said first output image and said second output image by said first projector and said second projector, respectively.

17. A method according to any of the preceding claims comprises the steps of:
(ca) producing said first output image and said second output image of a first colour, and
(cb) producing said first output image and said second output image of a second colour.

18. A system for producing a first output image and a second output image for being projected by a first projector (1) and a second projector (2), respectively, said system comprising a computer and/or one or more circuits for performing the method according to any of the claims 1 to 17.

19. The system according to claim 18 **characterized by** said first projector (1) being a first laser illuminated projector and/or said second projector (2) being a second laser illuminated projector.

## Patentansprüche

1. Verfahren zur Erzeugung eines ersten Ausgabebildes und eines zweiten Ausgabebildes aus einem Quellbild zur Projektion durch einen ersten Projektor (1) beziehungsweise einen zweiten Projektor (2), sodass, wenn die zwei projizierten Bilder überlagert werden, ein Bild gebildet wird, welches dem Quellbild entspricht, wobei das Quellbild eine Vielzahl von Pixeln umfasst, wobei jedes Pixel einen Quellwert aufweist, **gekennzeichnet durch** die Schritte:
(a) Bereitstellen eines Schwellenwertes für jedes Pixel aus der Vielzahl von Pixeln,
(b) Bereitstellen eines invertierten Schwellenwertes für jedes Pixel aus der Vielzahl von Pixeln, wobei jeder invertierte Schwellenwert eine Inversion von dessen zugehörigem Schwellenwert ist,
(c) Erzeugen eines temporären Bildes, umfassend einen temporären Wert für jedes Pixel aus der Vielzahl von Pixeln, wobei der temporäre Wert erzeugt wird gemäß folgendem Prozess:
(i.i) für jedes Pixel Bestimmen eines ersten Maximalwertes als das Maximum des Quellwertes und dessen zugehörigen Schwellenwertes,
(i.ii) für jedes Pixel Bestimmen eines ersten Differenzwertes durch Subtraktion des zugehörigen Schwellenwertes vom ersten Maximalwert,
(i.iii) für jedes Pixel Bestimmen eines ersten Minimalwertes als das Minimum des Quellwertes und dessen zugehörigen invertierten Schwellenwertes,
(i.iv) Bestimmen eines ersten Prozesswertes als das Minimum des ersten Differenzwertes und des ersten Minimalwertes für jedes Pixel, oder alternativ das Bestimmen eines ersten Prozesswertes aus einem intermediären Bereich von Werten, umfassend Werte zwischen dem ersten Differenzwert und dem ersten Minimalwert, für jedes Pixel,
(i.v) Erzeugen eines zweiten Prozesswertes aus dem invertierten Schwellenwert,
(i.vi) Bestimmen eines intermediären Wertes als das Maximum des ersten Prozesswertes und des zweiten Prozesswertes für jedes Pixel, oder alternativ Bestimmen eines intermediären Wertes aus einem ersten Bereich von Werten, umfassend Werte zwischen dem ersten Prozesswert und dem zweiten Prozesswert, für jedes Pixel,
(i.vii) für jedes Pixel Erzeugen des temporären Wertes aus dem intermediären Wert;
(d) Erzeugen des ersten Ausgabebildes, umfassend einen ersten Ausgabewert für jedes Pixel aus der Vielzahl von Pixeln, wobei der erste Ausgabewert erzeugt wird aus einem zweiten Differenzwert, wobei der zweite Differenzwert bestimmt **durch** Subtraktion des temporären Wertes vom Quellwert für jedes Pixel, und
(e) Erzeugen des zweiten Ausgabebildes, umfassend einen zweiten Ausgabewert für jedes Pixel aus der Vielzahl von Pixeln, wobei der zweite Ausgabewert erzeugt wird aus dem temporären Wert.

2. Verfahren nach Anspruch 1, **dadurch gekennzeichnet, dass** der Prozess der Erzeugung des temporären Wertes ferner umfasst:
(i.viii) Durchführen einer intermediären Erosionsoperation auf dem zweiten Prozesswert für jedes Pixel aus der Vielzahl von Pixeln.

3. Verfahren nach Anspruch 2, **dadurch gekennzeichnet, dass** die intermediäre Erosionsoperation eine Grauwert-Erosionsoperation ist.

4. Verfahren nach einem der Ansprüche 2 bis 3, **dadurch gekennzeichnet, dass** die intermediäre Erosionsoperation einen Erosionsradius umfasst.

5. Verfahren nach Anspruch 4, **dadurch gekennzeichnet, dass** die intermediäre Erosionsoperation den Erosionsradius aufweist in einem oder mehreren der geschlossenen Bereiche 2 Pixel bis 20 Pixel, 4 Pixel bis 18 Pixel, 6 Pixel bis 16 Pixel, 8 Pixel bis 14 Pixel und 10 Pixel bis 12 Pixel, vorzugsweise 12 Pixel; und/oder in einem oder mehreren der geschlossenen Bereiche 2 Pixel bis 4 Pixel, 4 Pixel bis 6 Pixel, 6 Pixel bis 8 Pixel, 8 Pixel bis 10 Pixel, 10 Pixel bis 12 Pixel, 12 Pixel bis 14 Pixel, 14 Pixel bis 16 Pixel, 16 Pixel bis 18 Pixel und 18 Pixel bis 20 Pixel; und/oder in einem oder mehreren der geschlossenen Bereiche 0,04% bis 0,06% der Breite des temporären Bildes, 0,04% bis 0,06% der Breite des temporären Bildes, 0,06% bis 0,08% der Breite des temporären Bildes, 0,08% bis 0,10% der Breite des temporären Bildes, 0,10% bis 0,12% der Breite des temporären Bildes, 0,08% bis 0,10% der Breite des temporären Bildes, 0,12% bis 0,14% der Breite des temporären Bildes, 0,14% bis 0,16% der Breite des temporären Bildes, 0,16% bis 0,18% der Breite des temporären Bildes und/oder 0,18% bis 0,20% der Breite des temporären Bildes, vorzugsweise 0,10% der Breite des temporären Bildes.

6. Verfahren nach einem der Ansprüche 1 bis 5, **dadurch gekennzeichnet, dass** der Prozess der Erzeugung des temporären Wertes ferner umfasst: (i.ix) Glätten des zweiten Prozesswertes.

7. Verfahren nach Anspruch 6, **dadurch gekennzeichnet, dass** das Glätten des zweiten Prozesswertes einen Spline-Filter umfasst, einen Membranfilter und/oder einen Hüllkurvenfilter.

8. Verfahren nach einem der Ansprüche 6 bis 7, **dadurch gekennzeichnet, dass** das Glätten des zweiten Prozesswertes adaptiert wird für das Begrenzen des zweiten Prozesswertes auf einen Wert aus dem intermediären Bereich von Werten im Anschluss an das Glätten.

9. Verfahren nach einem der Ansprüche 6 bis 8, **dadurch gekennzeichnet, dass** das Glätten des zweiten Prozesswertes eine intermediäre Weichzeichner-Operation umfasst.

10. Verfahren nach Anspruch 9 und einem der Ansprüche 4 bis 5, **dadurch gekennzeichnet, dass** die intermediäre Weichzeichner-Operation einen intermediären Unschärfe-Radius umfasst, welcher annähernd gleich ist dem Erosionsradius.

11. Verfahren nach Anspruch 10, **dadurch gekennzeichnet, dass** die intermediäre Weichzeichner-Operation eine intermediäre Gaußsche Weichzeichner-Operation und/oder eine intermediäre Mittelwertfilter-Operation umfasst.

12. Verfahren nach einem der Ansprüche 1 bis 11, **dadurch gekennzeichnet, dass** der Prozess der Erzeugung des temporären Wertes ferner umfasst:
(i.x) Skalieren des zweiten Prozesswertes durch einen Skalierungsfaktor.

13. Verfahren nach Anspruch 12, **dadurch gekennzeichnet, dass** der Skalierungsfaktor annähernd 0,5 beträgt.

14. Verfahren nach einem der Ansprüche 2 bis 5 und 6 bis 11, **dadurch gekennzeichnet, dass** das Durchführen der intermediären Erosionsoperation vor dem Glätten des zweiten Prozesswertes erfolgt.

15. Verfahren nach einem der Ansprüche 12 bis 13 und 6 bis 11, **dadurch gekennzeichnet, dass** das Glätten des zweiten Prozesswertes ausgeführt wird vor dem Skalieren des zweiten Prozesswertes.

16. Verfahren nach einem der Ansprüche 1 bis 15, wobei das Doppelstapeln des ersten Ausgabebildes und des zweiten Ausgabebildes auf einer Projektionsfläche durch den ersten Projektor (1) und den zweiten Projektor (2) die Schritte umfasst:
(aa) Positionieren und Orientieren des ersten Projektors und des zweiten Projektors für das Überlagern des ersten Ausgabebildes und des zweiten Ausgabebildes auf der Projektionsfläche,
(ab) Erzeugen des ersten Ausgabebildes und des zweiten Ausgabebildes,
(ac) Bereitstellen des ersten Ausgabebildes und des zweiten Ausgabebildes für den ersten Projektor beziehungsweise den zweiten Projektor, und
(ad) Projizieren des ersten Ausgabebildes und des zweiten Ausgabebildes durch den ersten Projektor beziehungsweise den zweiten Projektor.

17. Verfahren nach einem der vorhergehenden Ansprüche, umfassend die Schritte:
(ca) Erzeugen des ersten Ausgabebildes und des zweiten Ausgabebildes mit einer ersten Farbe, und
(cb) Erzeugen des ersten Ausgabebildes und des zweiten Ausgabebildes mit einer zweiten Farbe.

18. System zur Erzeugung eines ersten Ausgabebildes und eines zweiten Ausgabebildes zur Projektion durch einen ersten Projektor (1) beziehungsweise einen zweiten Projektor (2), wobei das System einen Computer und/oder einen oder mehrere Schaltkreise umfasst für das Ausführen des Verfahrens nach einem der Ansprüche 1 bis 17.

19. System nach Anspruch 18, **dadurch gekennzeichnet, dass** der erste Projektor (1) ein erster laserbeleuchteter Projektor ist und/oder dass der zweite Projektor (2) ein zweiter laserbeleuchteter Projektor ist.

## Revendications

1. Procédé de production d'une première image de sortie et d'une seconde image de sortie à partir d'une image source destinées à être projetée par un premier projecteur (1) et un second projecteur (2) respectivement de sorte que, lorsque les deux images projetées sont superposées, une image qui correspond à 1"image source soit formée, l'image source comprenant une pluralité de pixels, chaque pixel ayant une valeur source, **caractérisé par** les étapes qui consistent à :
(a) prévoir une valeur de seuil pour chaque pixel de ladite pluralité de pixels,
(b) prévoir une valeur de seuil inversée pour chaque pixel de ladite pluralité de pixels, chaque valeur de seuil inversée étant une inversion de sa valeur de seuil correspondante,
(c) générer une image temporaire qui comprend une valeur temporaire pour chaque pixel de ladite pluralité de pixels, ladite valeur temporaire étant générée au cours d'un processus selon :
(i.i) la détermination d'une première valeur maximale comme maximum de ladite valeur source et de sa valeur de seuil correspondante pour chaque pixel,
(i.ii) la détermination d'une première valeur de différence en soustrayant la valeur de seuil correspondante de ladite première valeur maximale pour chaque pixel,
(i.iii) la détermination d'une première valeur minimale comme minimum de ladite valeur source et de sa valeur de seuil inversée correspondante pour chaque pixel,
(i.iv) la détermination d'une première valeur de processus comme minimum de ladite première valeur de différence et de ladite première valeur minimale pour chaque pixel, ou, en variante, la détermination d'une première valeur de processus à partir d'une plage intermédiaire de valeurs qui comprend des valeurs situées entre ladite première valeur de différence et ladite première valeur minimale pour chaque pixel,
(i.v) la génération d'une seconde valeur de processus à partir de la valeur de seuil inversée,
(i.vi) la détermination d'une valeur intermédiaire comme maximum de ladite première valeur de processus et de ladite seconde valeur de processus pour chaque pixel, ou, en variante, la détermination d'une valeur intermédiaire à partir d'une première plage de valeurs qui comprend des valeurs situées entre ladite première valeur de processus et ladite seconde valeur de processus pour chaque pixel,
(i.vii) la génération de ladite valeur temporaire à partir de ladite valeur intermédiaire pour chaque pixel ;
(d) générer ladite première image de sortie qui comprend une première valeur de sortie pour chaque pixel de ladite pluralité de pixels, ladite première valeur de sortie étant générée à partir d'une seconde valeur de différence, ladite seconde valeur de différence étant déterminée en soustrayant ladite valeur temporaire de ladite valeur source pour chaque pixel, et
(e) générer ladite seconde image de sortie qui comprend une seconde valeur de sortie pour chaque pixel de ladite pluralité de pixels, ladite seconde valeur de sortie étant générée à partir de ladite valeur temporaire.

2. Procédé selon la revendication 1, **caractérisé en ce que** ledit processus de génération de ladite valeur temporaire comprend en outre :
(i.viii) l'exécution d'une opération d'érosion intermédiaire sur ladite seconde valeur de processus pour chaque pixel de ladite pluralité de pixels.

3. Procédé selon la revendication 2, **caractérisé en ce que** ladite opération d'érosion intermédiaire est une opération d'érosion à niveaux de gris.

4. Procédé selon l'une quelconque des revendications 2 à 3, **caractérisé en ce que** ladite opération d'érosion intermédiaire comprend un rayon d'érosion.

5. Procédé selon la revendication 4, **caractérisé en ce que** ladite opération d'érosion intermédiaire comprend un rayon d'érosion dans une ou plusieurs des plages fermées de 2 pixels à 20 pixels, de 4 pixels à 18 pixels, de 6 pixels à 16 pixels, de 8 pixels à 14 pixels, et de 10 pixels à 12 pixels, de préférence de 12 pixels ; et/ou dans une ou plusieurs des plages fermées de 2 pixels à 4 pixels, de 4 pixels à 6 pixels, de 6 pixels à 8 pixels, de 8 pixels à 10 pixels, de 10 pixels à 12 pixels, de 12 pixels à 14 pixels, de 14 pixels à 16 pixels, de 16 pixels à 18 pixels, ou de 18 à 20 pixels ; et/ou dans une ou plusieurs des plages fermées de 0,04% à 0,06% de la largeur de l'image temporaire, de 0,04% à 0,06% de la largeur de l'image temporaire, de 0,06% à 0,08% de la largeur de l'image temporaire, de 0,08% à 0,10% de la largeur de l'image temporaire, de 0,10% à 0,12% de la largeur de l'image temporaire, de 0,08% à 0,10% de la largeur de l'image temporaire, de 0,12% à 0,14% de la largeur de l'image temporaire, de 0,14% à 0,16% de la largeur de l'image temporaire, de 0,16% à 0,18% de la largeur de l'image temporaire, et/ou de 0,18% à 0,20% de la largeur de l'image temporaire, de préférence de 0,10% de la largeur de l'image temporaire.

6. Procédé selon l'une quelconque des revendications 1 à 5, **caractérisé en ce que** ledit processus de génération de ladite valeur temporaire comprend en outre :
(i.ix) le lissage de ladite seconde valeur de processus.

7. Procédé selon la revendication 6, **caractérisé en ce que** ledit lissage de ladite seconde valeur de processus comprend un filtre de spline, un filtre à membrane, et/ou un filtre à enveloppe.

8. Procédé selon l'une quelconque des revendications 6 à 7, **caractérisé en ce que** ledit lissage de ladite seconde valeur de processus est adapté pour limiter ladite seconde valeur de processus à une valeur issue de ladite plage intermédiaire de valeurs après ledit lissage.

9. Procédé selon l'une quelconque des revendications 6 à 8, **caractérisé en ce que** ledit lissage de ladite seconde valeur de processus comprend une opération d'estompage intermédiaire.

10. Procédé selon la revendication 9 et l'une quelconque des revendications 4 à 5, **caractérisé en ce que** ladite opération d'estompage intermédiaire comprend un rayon d'estompage intermédiaire approximativement égal audit rayon d'érosion.

11. Procédé selon la revendication 10, **caractérisé en ce que** ladite opération d'estompage intermédiaire comprend une opération d'estompage gaussien intermédiaire et/ou une opération de filtrage moyen intermédiaire.

12. Procédé selon l'une quelconque des revendications 1 à 11, **caractérisé en ce que** ledit processus de génération de ladite valeur temporaire comprend en outre :
(i.x) la mise à l'échelle de ladite seconde valeur de processus selon un facteur d'échelle.

13. Procédé selon la revendication 12, **caractérisé en ce que** ledit facteur d'échelle est d'environ 0,5.

14. Procédé selon l'une quelconque des revendications 2 à 5 et 6 à 11, **caractérisé en ce que** ladite opération d'érosion intermédiaire est exécutée avant ledit lissage de ladite seconde valeur de processus.

15. Procédé selon l'une quelconque des revendications 12 à 13 et 6 à 11, **caractérisé en ce que** ledit lissage de ladite seconde valeur de processus est effectué avant ladite mise à l'échelle de ladite seconde valeur de processus.

16. Procédé selon l'une quelconque des revendications 1 à 15, dans lequel la superposition de la première image de sortie et de la seconde image de sortie sur une surface de projection par le premier projecteur (1) et le second projecteur (2) comprend les étapes qui consistent à :
(aa) positionner et orienter ledit premier projecteur et ledit second projecteur afin de superposer ladite première image de sortie et ladite seconde image de sortie sur ladite surface de projection,
(ab) produire ladite première image de sortie et ladite seconde image de sortie,
(ac) fournir ladite première image de sortie et ladite seconde image de sortie audit premier projecteur et audit second projecteur, respectivement, et
(ad) projeter ladite première image de sortie et ladite seconde image de sortie à l'aide dudit premier projecteur et dudit second projecteur, respectivement.

17. Procédé selon l'une quelconque des revendications précédentes, qui comprend les étapes qui consistent à :
(ca) produire ladite première image de sortie et ladite seconde image de sortie d'une première couleur, et
(cb) produire ladite première image de sortie et ladite seconde image de sortie d'une seconde couleur.

18. Système de production d'une première image de sortie et d'une seconde image de sortie destinées à être projetées par un premier projecteur (1) et un second projecteur (2), respectivement, ledit système comprenant un ordinateur et/ou un ou plusieurs circuit(s) destiné(s) à exécuter le procédé selon l'une quelconque des revendications 1 à 17.

19. Système selon la revendication 18, **caractérisé en ce que** ledit premier projecteur (1) est un premier projecteur éclairé par laser et/ou ledit second projecteur (2) est un second projecteur éclairé par laser.
